(19) Europäisches Patentamt
European Patent Office
Office européen des brevets

(11) Veröffentlichungsnummer : **0 183 054**
**B1**

(12) # EUROPÄISCHE PATENTSCHRIFT

(45) Veröffentlichungstag der Patentschrift : **13.04.88**

(51) Int. Cl.⁴ : **C 09 B 62/503**, D 06 P 1/384

(21) Anmeldenummer : **85113497.3**

(22) Anmeldetag : **24.10.85**

(54) **Kupfer-Formazanverbindungen, Verfahren zu ihrer Herstellung und ihre Verwendung als Farbstoffe.**

(30) Priorität : **03.11.84 DE 3440265**

(43) Veröffentlichungstag der Anmeldung : **04.06.86 Patentblatt 86/23**

(45) Bekanntmachung des Hinweises auf die Patenterteilung : **13.04.88 Patentblatt 88/15**

(84) Benannte Vertragsstaaten : **CH DE FR GB IT LI**

(56) Entgegenhaltungen :
**EP-A- 0 028 787**
**EP-A- 0 028 788**
**CH-A- 441 571**

(73) Patentinhaber : **HOECHST AKTIENGESELLSCHAFT**
**Postfach 80 03 20**
**D-6230 Frankfurt am Main 80 (DE)**

(72) Erfinder : **Schwaiger, Günther, Dr.**
**Johannesallee 41**
**D-6230 Frankfurt am Main 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 183 054 B1

**Beschreibung**

Die vorliegende Erfindung liegt auf dem technischen Gebiet der Metallkomplexformazanfarbstoffe mit faserreaktiven Eigenschaften.

Aus der britischen Patentschrift Nr. 1 194 504 sind bereits sog. bicyclische Metallkomplexformazanfarbstoffe, die eine faserreaktive Gruppe der Vinylsulfonreihe enthalten, bekannt ; ein Farbstoff dieses Typs ist beispielsweise die Verbindung der Formel

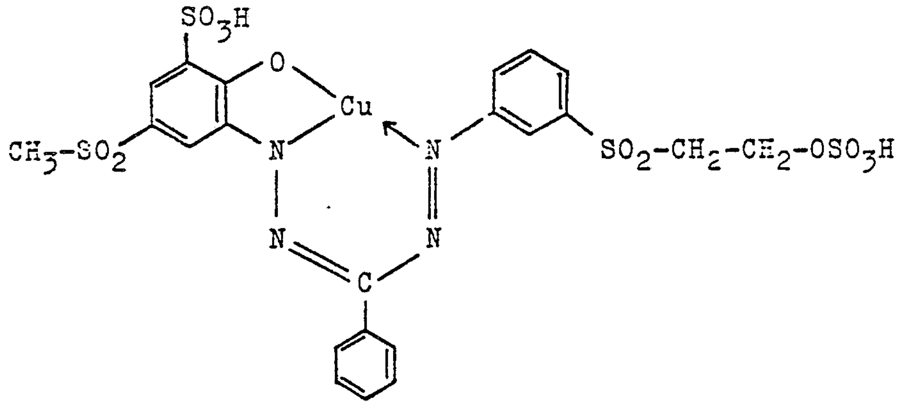

Diese bekannten Farbstoffe haben nicht nur den Nachteil, daß die Herstellung der in ortho-Stellung durch Hydroxy substituierten Phenylhydrazin-Komponenten in der Mehrzahl bisher praktisch nicht möglich ist, so daß Farbstoffe dieses Typs nach dem in der deutschen Patentschrift Nr. 1 062 851 beschriebenen Verfahren hergestellt werden müssen mit der Folge, daß teure und schwierig herstellbare Kupplungskomponenten, wie Phenylformylessigsäureester, benötigt werden, sondern auch den Nachteil, daß sie gewisse Mängel in ihren Echtheits- und anwendungstechnischen Eigenschaften besitzen.

Es wurden neue Kupferkomplex-Formazan-Verbindungen gefunden, die gute anwendungstechnische Eigenschaften besitzen und Färbungen und Drucke mit sehr guten Echtheitseigenschaften liefern. Diese neuen Verbindungen entsprechen der allgemeinen Formel (1)

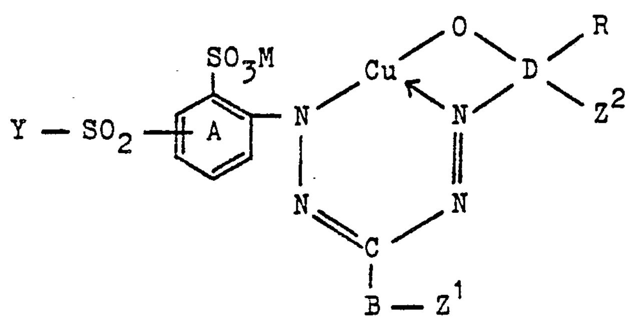

(1)

in welcher die einzelnen Formelreste die folgende Bedeutung besitzen : Y ist die Vinylgruppe oder eine Gruppe der Formel (2)

$$-CH_2-CH_2-E \qquad (2)$$

in welcher

E einen alkalisch eliminierbaren Substituenten darstellt ;

der Benzolkern A kann durch weitere Substituenten, wie einen oder zwei, bevorzugt einen Substituenten, substituiert sein, wie beispielsweise durch Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Fluor und Brom und insbesondere Chlor, Carboxy (entsprechend der allgemeinen Formel $-COOM$ mit M der nachstehend angegebenen Bedeutung) und Sulfo (entsprechend der allgemeinen Formel $-SO_3M$ mit M der nachstehend angegebenen Bedeutung) ;

die Gruppe $Y-SO_2-$ ist an den Benzolkern A in meta-Stellung zur angegebenen Gruppe $-SO_3M$ und para-Stellung zum Stickstoffatom oder in para-Stellung zur angegebenen Gruppe $-SO_3M$ und meta-Stellung zum Stickstoffatom gebunden ;

M ist ein Wasserstoffatom oder das Äquivalent eines Metalls, vorzugsweise eines Alkalimetalls, wie

Natrium, Kalium oder Lithium, und eines Erdalkalimetalls, wie des Calciums ;

B ist ein Phenylen- oder ein Naphthylenrest, die beide durch 1 oder 2 Substituenten substituiert sein können, die aus der Gruppe Hydroxy, Nitro, Halogen, wie Fluor, Brom und Chlor, Alkyl von 1 bis 5 C-Atomen, vorzugsweise Methyl und Ethyl, Alkoxy von 1 bis 4 C-Atomen, vorzugsweise Methoxy und Ethoxy, Carbalkoxy mit 1 bis 4 C-Atomen im Alkylrest, wie Carbomethoxy und Carbethoxy, einer Gruppe der nachstehend definierten Formel $—SO_2—Y^1$, Alkylsulfonyl von 1 bis 4 C-Atomen, Amino, Acylamino mit dem Acylrest einer aliphatischen Carbonsäure oder Sulfonsäure mit 1 bis 4 bzw. 2 bis 4 C-Atomen im Alkyl- bzw. Alkenylrest oder der gegebenenfalls durch Sulfo, Carboxy, Chlor und Methyl substituierten Benzoe- oder Benzolsulfonsäure, Sulfamoyl, N-Monoalkylamino von 1 bis 4 C-Atomen und N,N-Dialkylamino mit jeweils 1 bis 4 C-Atomen in den Alkylresten ausgewählt sind, oder

B ist der Rest des gegebenenfalls durch Alkyl von 1 bis 4 C-Atomen, Alkoxy von 1 bis 4 C-Atomen, Chlor, Benzyl, Phenethyl und/oder Phenyl substituierten Furans, Thiophens, Pyrrols, Imidazols, Pyrazols, Pyridins, Pyrimidins, Chinolins oder Benzimidazols oder

B ist der bivalente Rest eines gerad- oder verzweigtkettigen Alkans von 1 bis 8 C-Atomen, wie der Methan-, Ethan-, Isopropan-, n-Butan-, sek.-Butan-, tert.-Butan-, n-Heptan- oder n-Octanrest, oder eines gerad- oder verzweigt-kettigen Alkens von 2 bis 8 C-Atomen, wie die Vinyliden- oder Acrylidengruppe, wobei diese Alkan- und Alkenreste noch durch einen Phenylrest substituiert sein können, der wiederum durch Substituenten aus der Gruppe Methyl, Ethyl, Methoxy, Ethoxy, Fluor, Chlor, Brom und Sulfamoyl substituiert sein kann, oder

$—B—Z^1$ stellen zusammen ein Wasserstoffatom dar ;

D ist ein Benzol- oder ein Naphthalinkern, an denen das Sauerstoffatom und das Stickstoffatom zueinander orthoständig gebunden sind und die durch 1 oder 2, bevorzugt einen Substituenten, aus der Gruppe Halogen, wie Fluor, Brom, und insbesondere Chlor, Nitro, Hydroxy, Alkyl von 1 bis 5 C-Atomen, wie Methyl, Alkylaminoalkyl mit Alkylresten von jeweils 1 bis 5 C-Atomen, wie Methylaminomethyl, Alkoxy von 1 bis 4 C-Atomen, wie Methoxy und Ethoxy, Alkylsulfonyl von 1 bis 4 C-Atomen, wie Methylsulfonyl und Ethylsulfonyl, Phenylsulfonyl, Sulfamoyl, N-Monoalkylsulfamoyl von 1 bis 4 C-Atomen, N,N-Dialkylsulfamoyl mit jeweils 1 bis 4 C-Atomen in den Alkylresten, Alkanoylamino von 2 bis 5 C-Atomen, wie Acetylamino, Aroylamino, wie Benzoylamino, N-Monoalkylamino von 1 bis 4 C-Atomen, N,N-Dialkylamino mit jeweils 1 bis 4 C-Atomen in den Alkylresten, Phenyl und substituiertes Phenyl, wie durch Sulfo, Carboxy, Chlor, Methyl und/oder Methoxy substituiertes Phenyl ;

R ist ein Wasserstoffatom oder eine Gruppe der nachstehend definierten Gruppe der Formel (2a)

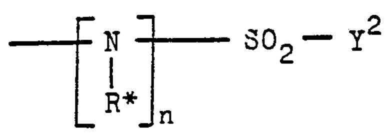

(2a)

substituiert sein können ;

$Z^1$ ist ein Wasserstoffatom oder eine wasserlöslichmachende Gruppe, wie eine Carboxy- oder Phosphonsäuregruppe, — als wasserlöslichmachende Gruppe bevorzugt jedoch eine Sulfo-gruppe —, die an aliphatische oder aromatische Kohlenstoffatome von B, vorzugsweise an aromatische Kohlenstoffatome, einmal oder zweimal gebunden ist ;

$Z^2$ ist ein Wasserstoffatom oder eine wasserlöslichmachende Gruppe, wie eine Carboxy- oder Phosphonsäuregruppe, — als wasserlöslichmachende Gruppe jedoch bevorzugt eine Sulfogruppe —, die an aliphatische Kohlenstoffatome von Substituenten an D oder an aromatische Kohlenstoffatome von D, vorzugsweise an aromatische Kohlenstoffatome, einmal oder zweimal gebunden ist ;

R* ist ein Wasserstoffatom oder eine Alkylgruppe von 1 bis 4 C-Atomen, wie die Methyl oder Ethylgruppe, die durch eine Hydroxy-, Sulfato-, Sulfo- oder Carboxygruppe substituiert sein kann ;

n ist die Zahl Null oder 1 ;

$Y^1$ ist die Vinylgruppe oder eine Gruppe der allgemeinen Formel (2b)

$$—CH_2—CH_2—E^1 \qquad (2b)$$

in welcher

$E^1$ eine Hydroxygruppe oder einen alkalisch eliminierbaren Substituenten darstellt ;

$Y^2$ ist die Vinylgruppe oder eine Gruppe der allgemeinen Formel (2c)

$$—CH_2—CH_2—E^2 \qquad (2c)$$

in welcher $E^2$ Hydroxygruppe oder einen alkalisch eliminierbaren Substituenten bedeutet.

Die Gruppen der Formeln $—SO_2—Y$, $—SO_2—Y^1$ und $—SO_2—Y^2$ können zueinander gleiche oder voneinander verschiedene Bedeutungen haben. Die alkalisch eliminierbaren Substituenten E, $E^1$ und $E^2$

sind beispielsweise ein Halogenatom, wie Chlor- oder Bromatom, ein niedere Alkanoyloxygruppe, wie die Acetyloxygruppe, eine Aroyloxygruppe, wie die Benzoyloxy- oder Sulfobenzoyloxy-Gruppe, eine Arylsulfonyloxygruppe, wie die Toluyloxygruppe, eine niedere Dialkylaminogruppe, wie die Dimethylamino- oder Diethylaminogruppe, eine Phosphatogruppe (entsprechend der allgemeinen Formel $—OPO_3M_2$ mit M der obengenannten Bedeutung), eine Thiosulfatogruppe (entsprechend der allgemeinen Formel $—S—SO_3M$ mit M der obengenannten Bedeutung) oder eine Sulfatogruppe (entsprechend der allgemeinen Formel $—OSO_3M$ mit M der obengenannten Bedeutung). Bevorzugt ist Y, $Y^1$ und $Y^2$ in den neuen Verbindungen der allgemeinen Formel (1) die Vinylgruppe und insbesondere die β-Sulfatoethylgruppe.

Sofern B ein oben genannter phenylsubstituierter Alkyl- oder Alkenylrest ist, ist er bevorzugt der Benzyl- oder Styrylrest.

$Z^1$ und $Z^2$ können zueinander gleiche oder voneinander verschiedene Bedeutungen haben. Sofern die $Z^1$ oder $Z^2$ jeweils zweimal an das Molekül gebunden sind, kann jedes für sich verschiedene Bedeutungen haben. $Z^1$ ist bevorzugt in meta- oder para-Stellung zum C-Atom des heterocyclischen Cu-Komplex-Ringes an B gebunden.

Bevorzugt sind Verbindungen der allgemeinen Formel (1), in welchen $Z^1$ oder $Z^2$ oder beide jeweils eine Sulfogruppe bedeuten.

Die neuen Verbindungen der allgemeinen Formel (1) können in saurer Form vorliegen. Bevorzugt sind sie in Form ihrer Salze, insbesondere der obengenannten Alkali- und Erdalkalimetallsalze. Sie finden, bevorzugt in Form der Alkalimetallsalze, Verwendung zum Färben (im allgemeinen Sinne einschließlich des Bedruckens) von hydroxygruppenhaltigen, amino- und carbonamidgruppenhaltigen Materialien.

Von den erfindungsgemäßen Verbindungen der allgemeinen Formel (1) sind diejenigen bevorzugt, in welchen die Gruppe $—SO_2—Y$ in meta-Stellung zum Stickstoffatom und gleichzeitig in para-Stellung zur Gruppe $—SO_3M$ steht. Des weiteren sind bevorzugt solche, in welchen B ein Naphthylenrest oder vorzugsweise ein Phenylenrest ist, die durch weitere Substituenten unsubstituiert oder durch 1 oder 2 weitere Substituenten aus der Gruppe Chlor, Methyl, Methoxy, Ethoxy, Nitro, Hydroxy, Methylsulfonyl, Ethylsulfonyl, β-Hydroxyethylsulfonyl, β-Sulfatoethylsulfonyl, Carbethoxy und Carbomethoxy substituiert sind und $Z^1$ für ein Wasserstoffatom oder eine oder zwei Sulfogruppen oder eine Sulfo- und eine Carboxygruppe steht, des weiteren solche, in welchen D ein Naphthalinkern oder vorzugsweise ein Benzolkern ist, die durch weitere Substituenten nicht substituiert oder durch 1 oder 2 weitere Substituenten aus der Gruppe Chlor, Nitro, Hydroxy, Acetamino, Methyl, Methylaminomethyl, Methoxy, Methylsulfonyl und Ethylsulfonyl substituiert sind, R ein Wasserstoffatom oder eine β-Hydroxyethylsulfonyl- oder β-Sulfatoethylsulfonyl-Gruppe bedeutet und $Z^2$ ein Wasserstoffatom oder eine oder zwei Sulfogruppen darstellt.

Hiervon sind hervorzuheben Verbindungen entsprechend der allgemeinen Formel (3)

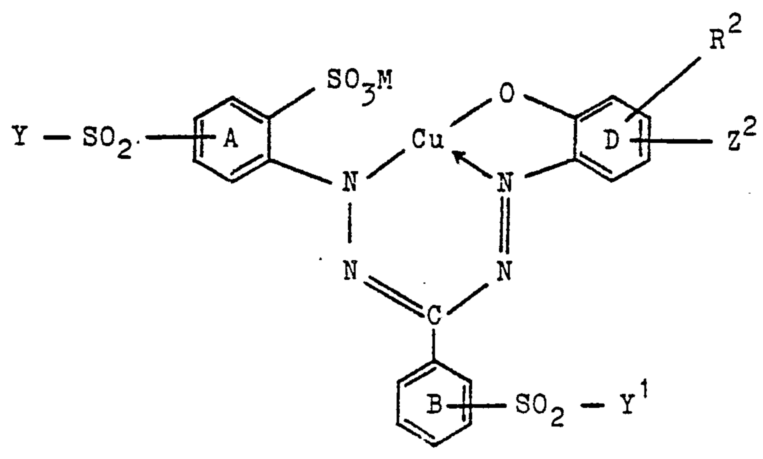

(3)

in welcher M, Y und $Y^1$ die obengenannten, insbesondere bevorzugten Bedeutungen besitzen, Y und $Y^1$ insbesondere die β-Sulfatoethyl-Gruppen bedeuten, $R^2$ eine Gruppe der Formel $—SO_2—Y^2$ ist, in welcher $Y^2$ die obengenannte, insbesondere bevorzugte Bedeutung hat und insbesondere eine β-Sulfatoethylsulfonyl-Gruppe darstellt, oder $R^2$ eine Alkylsulfonylgruppe von 1 bis 4 C-Atomen, wie die Methylsulfonyl- oder Ethylsulfonylgruppe, ist und $Z^2$ ein Wasserstoffatom oder eine Sulfogruppe bedeutet, die ortho-ständig zum Sauerstoffatom an den Benzolkern D gebunden ist, wobei die Benzolkerne A, B und D bevorzugt keine der weiteren Substituenten als die hier angegebenen enthalten, oder in welcher $Z^2$ eine bevorzugt in para-Stellung zur Oxigruppe stehende Sulfogruppe bedeutet und $R^2$ hierbei ein Wasserstoffatom oder eine zu dieser Sulfogruppe $Z^2$ metastehende Acetylaminogruppe, Methyl-, Nitro- oder Sulfogruppe oder Chloratom bedeutet, wobei die Benzolkerne A, B und D bevorzugt keine der weiteren Substituenten als die hier angegebenen enthalten.

Besonders bevorzugt sind Verbindungen der allgemeinen Formel (4)

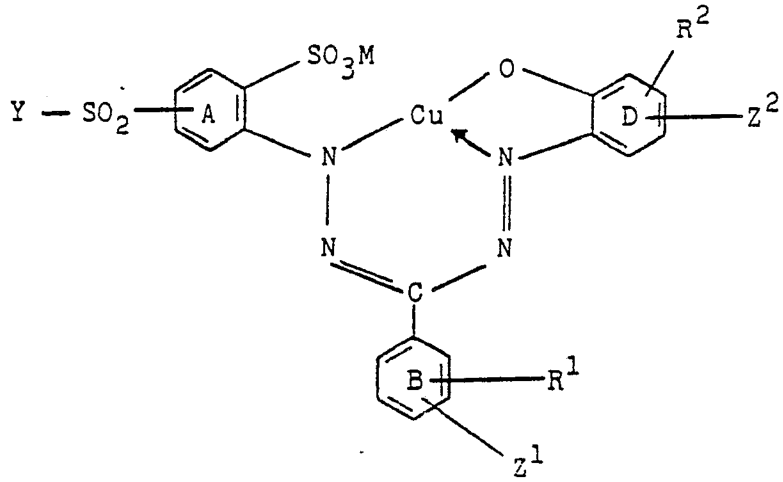

(4)

in welcher M und Y die obengenannten, insbesondere bevorzugten Bedeutungen besitzen und Y bevorzugt eine β-Sulfatoethyl-Gruppe ist, $R^1$ ein Wasserstoffatom oder eine Methyl- oder Methoxygruppe oder ein Chloratom bedeutet und in ortho-Stellung oder vorzugsweise in meta- oder para-Stellung zum C-Atom des heterocyclischen Cu-Komplex-Ringes an B gebunden ist, $Z^1$ ein Wasserstoffatom oder eine Sulfogruppe bedeutet, die in ortho-Stellung, bevorzugt in meta- oder para-Stellung, zum C-Atom des heterocyclischen Cu-Komplex-Ringes gebunden ist, und $Z^2$ eine Sulfogruppe ist, die paraständig zum Stickstoffatom an D gebunden ist, wobei die Benzolkerne A, B und D bevorzugt keine der weiteren Substituenten als die hier angegebenen enthalten,
oder in welcher M, Y, $R^1$ und $Z^1$ die eben für Formel (4) genannten Bedeutungen haben, $Z^2$ eine in para-Stellung zum Sauerstoffatom an D gebundene Sulfogruppe ist und $R^2$ ein Wasserstoffatom oder ein ortho-ständig zum Sauerstoffatom an D gebundenes Chloratom oder eine in ortho-Stellung zum Sauerstoffatom an D gebundene Acetylamino-, Methyl- Nitro- oder Sulfogruppe darstellt, wobei die Benzolkerne A, B und D bevorzugt keine der weiteren Substituenten als die hier angegebenen enthalten,
oder in welcher M, Y, $R^1$ und $Z^1$ die eben für Formel (4) genannten Bedeutungen haben und $Z^2$ eine in ortho-Stellung zum Sauerstoffatom an D gebundene Sulfogruppe ist und $R^2$ an D meta-ständig oder para-ständig zu $Z^2$ gebunden ist und eine Alkylsufonylgruppe von 1 bis 4 C-Atomen, wie insbesondere die Methylsulfonyl- und Ethylsulfonyl-Gruppe, ein Chloratom, eine Acetylaminogruppe oder eine Methylgruppe bedeutet.

Besonders bevorzugt sind weiterhin Verbindungen der allgemeinen Formel (5).

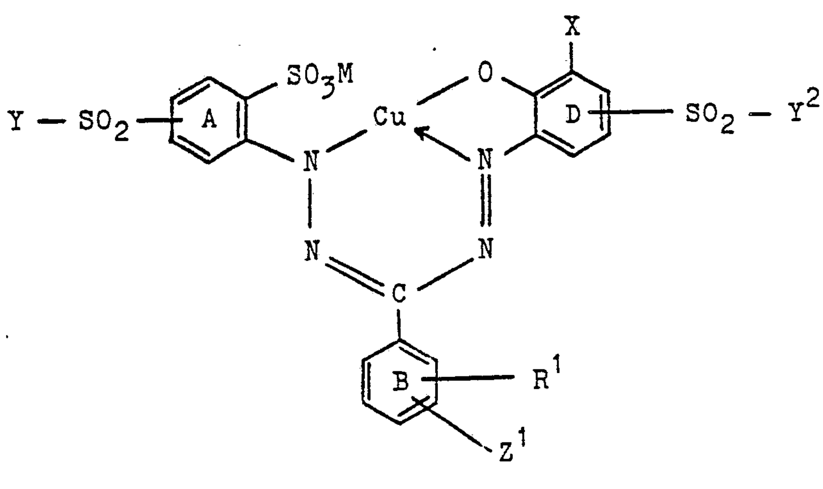

(5)

in welcher M, Y und $Y^2$ die obengenannten, insbesondere bevorzugten Bedeutungen haben, Y und $Y^2$ insbesondere die β-Sulfatoethyl-Gruppen bedeuten, $R^1$ ein Wasserstoffatom oder eine in ortho-Stellung, bevorzugt in meta- oder para-Stellung zum C-Atom des heterocyclischen Cu-Komplex-Ringes an B gebundene Methyl- oder Methoxygruppe oder Chloratom ist, $Z^1$ für ein Wasserstoffatom steht oder eine Sulfogruppe bedeutet, die in ortho-Stellung, bevorzugt in meta- oder para-Stellung, zum C-Atom des heterocyclischen Cu-Komplex-Ringes an B gebunden ist, und X entweder ein Wasserstoffatom ist und in diesem Falle die an D gebundene β-Sulfatoethylsulfonyl-Gruppe ortho- oder meta-ständig zu X steht oder X eine Sulfogruppe bedeutet, zu der die an D gebundene β-Sulfatoethylsulfonyl-Gruppe meta-ständig steht, wobei die Benzolkerne A, B und D bevorzugt keine der weiteren Substituenten als die hier

angegebenen enthalten.

Die vorliegende Erfindung betrifft weiterhin ein Verfahren zur Herstellung der obengenannten und definierten Verbindungen der allgemeinen Formel (1), das dadurch gekennzeichnet ist, daß man eine aromatische Hydrazonverbindung der allgemeinen Formel (6)

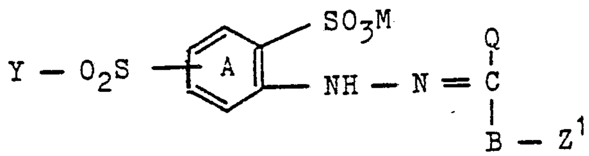

(6)

in welcher A, B, M, Y und $Z^1$ die obengenannten Bedeutungen haben und Q ein Wasserstoffatom oder einen durch Azokupplung ersetzbaren Substituenten, beispielsweise die Formylgruppe oder Carboxygruppe oder eine gegebenenfalls abgewandelte, zur Carboxygruppe verseifbare Gruppe, wie die Cyan-, eine Carbalkoxy- oder Cabonsäureamidgruppe, bedeutet, mit der Diazoniumverbindung eines aromatischen Amins der allgemeinen Formel (7)

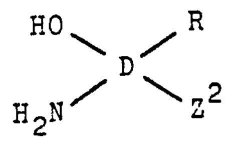

(7)

in welcher D, R und $Z^2$ die obengenannten Bedeutungen haben, und mit einem kupferabgebenden Mittel umsetzt, wobei man die Komponenten so auswählt, daß $Z^1$ und $Z^2$ die obengenannten Bedingungen erfüllen.

Das erfindungsgemäße Verfahren kann in üblicher und analog bekannter Verfahrensweise zur Herstellung von Metallkomplexformazanfarbstoffen ausgeführt werden. Vorzugsweise wird das erfindungsgemäße Verfahren bei einem pH-Wert zwischen 4 und 7, insbesondere zwischen 5 und 6, und bei einer Temperatur zwischen etwa 0 °C und 80 °C durchgeführt. Die Zugabe der Reaktionskomponenten kann beliebig sein, jedoch läuft die Kupplungsreaktion im pH-Bereich zwischen etwa 4 und etwa 6 nur bei Anwesenheit von Kupferionen als Dreikomponentenreaktion ab.

Als kupferabgebende Verbindungen kommen beispielsweise die einfachen und die komplexen Salze des Kupfers infrage, wie beispielsweise Kupfersulfat, Kupferchlorid, Kupferacetat und Kupfercarbonat und die Kupfersalze der Salicylsäure oder Weinsäure.

Verwendet man Kupfersalze von Mineralsäuren, so arbeitet man zweckmäßig in Gegenwart eines säureabstumpfenden Mittels, wie beispielsweise eines Alkalihydroxides oder -carbonats oder eines Alkalisalzes einer niederen Alkancarbonsäure, wie dier Essigsäure, oder eines basischen Alkalisalzes der Phosphorsäure. Solche Alkaliverbindungen sind insbesondere die Natrium- und Kaliumverbindungen, bevorzugt beispielsweise Natriumhydroxid, Kaliumhydroxid, Natrium- und Kaliumcarbonat, Natriumbicarbonat, Natriumacetat, Dinatriumhydrogenphosphat und Trinatriumphosphat.

Das kupferabgebende Mittel wird in äquimolaren Mengen verwendet, so daß auf ein Molekül der Verbindung der Formel (1) ein Schwermetall entfällt. Die Metallisierung geht üblicherweise schon bei Raumtemperatur (15 bis 25 °C) zu Ende ; vielfach ist aber ein schwaches Erwärmen, z. B. bis auf 60 bis 80 °C, oder ein Überschuß an der Hydrazonkomponente (6), beispielsweise von 10 bis 20 %, zweckmäßig.

Eine Verfahrensweise zur Herstellung der Kupferkomplexformazanverbindungen der allgemeinen Formel (1) ist beispielsweise die folgende : Man löst die Hydrazonverbindung der allgemeinen Formel (6) mit einem Alkali, wie Natriumbicarbonat oder Natriumcarbonat, in Wasser bei 0 bis 10 °C und hält den pH-Wert bevorzugt bei 5 bis 6. Anschließend gibt man die Diazoniumsalzlösung des Amins der Formel (7) hinzu, wobei man den pH-Wert der Reaktionslösung weder alkalisch noch zu stark sauer werden läßt, um zum einen beispielsweise die Sulfatoethylsulfonylgruppe im alkalischen nicht zu schädigen und zum anderen eine Ausfällung des Hydrazons und damit eine heterogene Reaktion im sauren Medium zu vermeiden. Vorzugsweise arbeitet man bei einem pH-Wert zwischen 4 bis 7, insbesondere 5 bis 6. Es ist aber auch möglich, das Hydrazon gelöst oder ungelöst zu der noch schwach sauren (pH 3-4) Diazolösung zuzugeben. Die Reaktionstemperatur soll zunächst zweckmäßig 15 °C, vorteilhaft 10 °C, möglichst nicht überschreiten.

Die dritte Komponente, das kupferabgebende Mittel, wie bspw. Kupfersulfat, wird in äquimolarer Menge gleichzeitig mit der Diazokomponente, bevorzugt nach der Diazokomponente, entweder in fester Form oder in Form einer wäßrigen Lösung, zugegeben.

Auch die Kupferreaktion wird vorteilhaft bei einem pH-Wert von 4 bis 7, insbesondere 4 bis 6, durchgeführt. Metallisierungs- und Kupplungsreaktion laufen gleichzeitig nebeneinander her. Die Metallisierungsreaktion läuft verhältnismäßig schnell ab. Vor der Isolierung der hergestellten Kupferkomplexformazanverbindung ist es, wie oben erwähnt, vorteilhaft, die Reaktionsmischung zu erwärmen, beispielsweise auf 40 bis 60 °C oder sogar bis auf etwa 80 °C, um die Kupplung und Metallisierung zu beschleunigen oder quantitativ durchzuführen und eine schnelle Klärung mittels Kieselgur zu bewirken.

Anschließend stellt man auf einen pH-Wert von 5 bis 6 und isoliert die hergestellte erfindungsgemäße Kupferkomplexformazanverbindung in üblicher Weise, beispielsweise durch Aussalzen mittels eines Elektrolyten, wie Natriumchlorid oder Kaliumchlorid.

Die Verbindung kann gegebenenfalls auch durch Eindampfen der Lösung, wie beispielsweise Sprühtrocknung, isoliert werden.

Die erfindungsgemäßen Verbindungen mit Y, $Y^1$ und/oder $Y^2$ gleich der Vinylgruppe können in erfindungsgemäßer Weise auch hergestellt werden, indem man eine entsprechende Kupferkomplexformazanverbindung der Formel (1), in welcher Y, $Y^1$ und/oder $Y^2$ eine β-Sulfatoethyl-Gruppe bedeuten, — in für diese Reaktion an und für sich üblicher Weise — in alkalisch-wäßriger Lösung bei einem pH-Wert zwischen 8 und 10, beispielsweise mittels Natronlauge oder Natriumcarbonat, und bei erhöhter Temperatur, beispielsweise etwa 40 bis 60 °C, behandelt.

Ebenso können die erfindungsgemäßen β-Thiosulfatoethylsulfonyl-Verbindungen der allgemeinen Formel (1) in erfindungsgemäßer Weise hergestellt werden, indem man eine erfindungsgemäße Vinylsulfonyl-Verbindung mit einem Salz der Thioschwefelsäure, wie beispielsweise Natriumthiosulfat, — vorteilhaft in einem Überschuß, vorzugsweise von 20 bis 40 Mol-%, des Thiosulfats, — in wäßriger schwach saurer Lösung, vorteilhaft bei einem pH-Wert zwischen 5 und 6,8, und bei erhöhter Temperatur, beispielsweise bei 30 bis 80 °C, insbesondere 60 bis 75 °C, umsetzt.

Eine weitere erfindungsgemäße Verfahrensvariante zur Herstellung von Verbindungen der allgemeinen Formel (1) mit E, $E^1$ und/oder $E^2$ gleich einer Estergruppe kann gemäß der anfangs erwähnten Verfahrensweise mit den Ausgangsverbindungen der allgemeinen Formel (6) und (7) und dem kupferabgebenden Mittel in der Weise erfolgen, daß man als Ausgangsverbindungen solche einsetzt, bei denen E, $E^1$ bzw. $E^2$ eine Hydroxygruppe bedeuten. Bei dieser erfindungsgemäßen Verfahrensvariante kann für die Umsetzung zu Kupferkomplexformazanverbindungen entsprechend der allgemeinen Formel (1), die zunächst die β-Hydroxyethylsulfonyl-Gruppe(n) enthalten, auch ein alkalischer Bereich, wie ein pH-Wert zwischen 4 und 14, gewählt werden, wobei die Kupplungsreaktion selbst zunächst bei einem pH-Wert zwischen 10 und 13, vorzugsweise etwa 12, sowie die Kupferreaktion in Gegenwart von Komplexbildnern, wie Weinsäure oder Zitronensäure, bei einem pH-Wert zwischen etwa 7 und 14 oder ohne Komplexbildner bei einem pH-Wert von 4 bis 7 durchgeführt werden kann. Die so hergestellte β-Hydroxyethylsulfonyl-Kupferkomplexformazanverbindung kann sodann erfindungsgemäß, doch analog an und für sich üblichen und bekannten Verfahrensweisen, durch Veresterung in eine Verbindung der allgemeinen Formel (1) übergeführt werden, in welcher Y, $Y^1$ und/oder $Y^2$ eine veresterte Ethylgruppe bedeuten, wie beispielsweise eine β-Sulfato-, β-Phosphato-, β-Aryloyloxy- oder β-Alkanoyloxyethyl-Gruppe. Vorzugsweise erfolgt die Veresterung zur Sulfatoverbindung mittels einem Sulfatierungsmittel, wie vorzugsweise Amidosulfonsäure oder Chlorsulfonsäure in Gegenwart von Pyridin.

Die als Ausgangsverbindungen dienenden Hydrazonverbindungen der allgemeinen Formel (6) gewinnt man aus den entsprechenden Phenylhydrazinen der allgemeinen Formel (8).

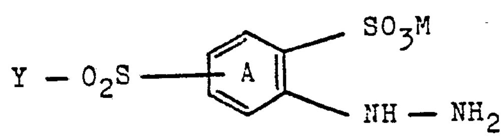

(8)

(mit A, M und Y der oben genannten Bedeutung), gegebenenfalls auch ohne deren Zwischenisolierung, durch Umsetzung mit einem Aldehyd der allgemeinen Formel (9).

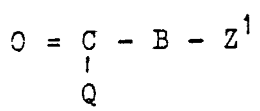

(9)

(mit B, Q und $Z^1$ der oben genannten Bedeutung) bei einem pH-Wert zwischen kleiner als 1 und 8, vorzugsweise zwischen 5 und 6. Die Phenylhydrazine (8) lassen sich analog bekannten Verfahrensweisen, beispielsweise aus den entsprechenden Diazoniumverbindungen durch Reduktion mittels Zinn-(II)-chlorid-dihydrat in wäßriger Salzsäure oder mit Salzen der schwefligen Säure unter Hydrolyse der intermediären N-Sulfonsäuren mittels Mineralsäuren, herstellen.

Steht Y im Hydrazon (6) oder Hydrazin (8) für die β-Hydroxyethyl-Gruppe, so können diese Verbindungen in an und für sich üblicher und bekannter Weise in ihre Schwefelsäurehalbester mit Y der β-Sulfatoethyl-Gruppe überführt werden, beispielsweise durch Eintragen der getrockneten Verbindung in 96-100 %iger oder $SO_3$-haltiger Schwefelsäure und Abscheidung und Isolierung der Sulfatoverbindung durch Vermischen mit Eis, Neutralisation bis zu einem pH-Wert von 4 bis 6 mittels $CaCO_3/Na_2CO_3$ und Aussalzung durch einen Elektrolyten.

Die Hydrazonverbindungen der allgemeinen Formel (6) mit Q der erwähnten abspaltbaren Gruppe kann man auch in an und für sich üblicher Weise erhalten, wenn man eine zweifach ankuppelbare Methin-oder Methylenverbindung, die den Strukturanteil des Formelrestes $Z^1$—B— enthält, mit der Diazoniumverbindung eines Amins der allgemeinen Formel (10).

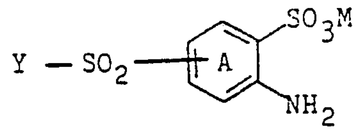 (10)

(mit A, M und Y der obengenannten Bedeutungen) kuppelt. Als zweifach ankuppelbare Methylen- oder Methinverbindungen, welche nach erfolgter Kupplung am Methinkohlenstoff noch eine gegebenenfalls abgewandelte Carboxygruppe aufweisen, kann man beispielsweise Malonsäurediethylester und vorzugsweise bspw. Phenylformylessigsäurealkylester, wie Phenylformylessigsäureethylester oder das entsprechende Nitril, ferner Chlorphenylformylessigsäurealkylester, Benzylformylessigsäurealkylester, Phenylcyanessigsäure, Phenylcyanessigsäurealkylester, Phenylessigsäureamid, α-Phenyl-acetessigsäurealkylester, α-Phenylacetessigsäurenitril oder Naphthylformylessigsäurealkylester verwenden.

Aromatische Amine der allgemeinen Formel (10), die als Ausgangsverbindungen für Hydrazine der Formel (8) und damit für Hydrazone der Formel (6) dienen können, sind beispielsweise 2-Amino-4-(2-hydroxyethylsulfonyl)-benzolsulfonsäure, 2-Amino-4-(2-sulfatoethylsulfonyl)-benzolsulfonsäure, 2-Amino-4-(2-hydroxyethylsulfonyl)-benzol-1,5-disulfonsäure, 2-Amino-4-(2-sulfatoethylsulfonyl)-benzol-1,5-disulfonsäure, 2-Amino-5-(2-hydroxyethylsulfonyl)-benzolsulfonsäure und 2-Amino-5-(2-sulfatoethylsulfonyl)-benzolsulfonsäure. Diese Verbindungen sind bekannt und können durch Sulfierung der entsprechenden β-Hydroxyethylsulfonyl-aniline oder durch Austausch des Chloratomes durch eine Sulfogruppe mittels Natriumsulfit/-bisulfit und anschließende Reduktion der Nitrogruppe in einem entsprechenden Chlor-nitrobenzol-β-hydroxyethylsulfon, wie bspw. im 1-Chlor-2-nitrobenzol-4-β-hydroxyethylsulfon (Bsp. 5 der DE-PS 859 462) hergestellt werden.

Aldehyde entsprechend der allgemeinen Formel (9) sind beispielsweise Benzaldehyd, 2-, 3- oder 4-Methyl-benzaldehyd, 4-Methyl-benzaldehyd-3-sulfonsäure, 2-, 3- oder 4-Methoxybenzaldehyd, 4-Methoxy-3-chlor-benzaldehyd, 2-, 3- oder 4-Nitro-benzaldehyd, 2-, 3- oder 4-Hydroxy-benzaldehyd, 2-, 3- oder 4-Chlor-benzaldehyd, 3,4- oder 2,4-Dichlorbenzaldehyd, 2-Chlor-benzaldehyd-5-sulfonsäure, 4-Chlor-benzaldehyd-2-sulfonsäure, Benzaldehyd-2-sulfonsäure, Benzaldehyd-3-sulfonsäure, Benzaldehyd-4-sulfonsäure, Benzaldehyd-2,4-disulfonsäure, 4-β-Hydroxyethylsulfonyl-benzaldehyd, 4-Benzolsulfonamidosalicylaldehyd, 4-Dimethylaminobenzaldehyd, 4-Diethylaminobenzaldehyd, 1-Naphthaldehyd, 2-Naphthaldehyd, Furan-2-aldehyd, Thiophen-2-aldehyd, Pyrrol-2-aldehyd, Imidazol-2-aldehyd, Pyrazol-5-aldehyd, Pyridin-2-aldehyd, Pyridin-3-aldehyd, Pyridin-4-aldehyd, Pyrimidin-5-aldehyd, Chinolin-4-aldehyd, Benzimidazol-2-aldehyd, Formaldehyd, Acetaldehyd, Propionalaldehyd, n-Butylaldehyd, Oenanthaldehyd, Acrylaldehyd, Crotonaldehyd, Phenacetaldehyd, Zimtaldehyd und Vanillin.

Diazokomponenten der allgemeinen Formel (7) sind beispielsweise 4-(2-Sulfatoethylsulfonyl)-2-aminophenol, 5-(2-Sulfatoethylsulfonyl)-2-aminophenol, 4-(2-Sulfatoethylsulfonyl)-2-aminophenol-6-sulfonsäure sowie deren Vinylsulfonyl- und β-Thiosulfatoethylsulfonyl-Abkömmlinge, wie zum Beispiel 4-Vinylsulfonyl-2-aminophenol-6-sulfonsäure und 4-(2-Thiosulfatoethylsulfonyl)-2-aminophenol-6-sulfonsäure, desweiteren die 2-Hydroxyethylsulfone, 2-Phosphatoethylsulfone, 2-Alkylsulfatoethylsulfone, 2-Arylsulfatoethylsulfone, 2-Alkylcarbonatoethylsulfone, 2-Arylcarbonatoethylsulfone, 2-Chlorethylsulfone, 2-Bromethylsulfone obiger 2-Aminophenole, sowie Carbylsulfatabkömmlinge, wie (2-Sulfatoethylsulfonylamino)- oder (2-Sulfatoethylsulfonylalkylamino)-2-aminophenole, sowie Äthanolaminabkömmlinge, wie (2-Sulfatoethylaminosulfonyl)-2-aminophenole, des weiteren beispielsweise 2-Aminophenol, 2-Aminophenol-4- oder -5-sulfonsäure, 2-Aminophenol-3,5- oder -4,6-disulfonsäure, 2-Aminophenol-4-sulfonsäureamid, 2-Aminophenol-4-sulfodimethylamid, 2-Aminophenol-4-ethyl-sulfon, 2-Aminophenol-4-ethylsulfon-6-sulfonsäure, 2-Aminophenol-4-methylsulfon-6-sulfonsäure, 6-Acetylamino-2-aminophenol-4-sulfonsäure, 6-Chlor-2-aminophenol-4-sulfonsäure, 6-Nitro-2-aminophenol-4-sulfonsäure, 4-Chlor-2-aminophenol-6-sulfonsäure, 4-Nitro-2-aminophenol-6-sulfonsäure, 2-Amino-4-methylphenol-6-sulfonsäure, 5-Amino-4-oxy-1,2-xylol, 5-Amino-4-oxy-1,3-xylol, 4-, 5- oder 6-Chlor-2-aminophenol, 4,6-Dichlor-2-aminophenol, 6-Chlor-4-amino-3-oxy-toluol, 4- oder 5-Nitro-2-aminophenol, 5-Nitro-3-amino-4-oxy-toluol, 4,6-Dinitro-2-aminophenol, 6-Chlor-4-nitro-2-aminophenol, 1-Amino-2-naphthol, 2-Amino-3-naphthol, 1-Amino-2-naphthol-4- oder -6-sulfonsäure, 1-Amino-2-naphthol-3,6- oder -4,6- oder -4,7-disulfonsäure und 6-Nitro-1-diazo-2-naphthol-4-sulfonsäure.

Die erfindungsgemäßen Kupferkomplexformazanverbindungen besitzen wertvolle Farbstoffeigenschaften. Sie werden bevorzugt zum Färben (im allgemeinen Sinne) von hydroxy-, amino- und/oder carbonamidgruppenhaltigen Materialien, beispielsweise in Form von Flächengebilden, wie Papier und Leder, oder in der Masse, wie Polyamid und Polyurethan, insbesondere von solchen Materialien in Faserform, verwendet.

Die vorliegende Erfindung betrifft demnach auch die Verwendung der Verbindungen der allgemeinen Formel (1) zum Färben (einschließlich Massefärbung und Druckfärbung) dieser Materialien bzw. Verfahren zum Färben solchen Materialien in an und für sich üblicher Verfahrensweise, bei welchen eine Verbindung der allgemeinen Formel (1) als Farbmittel eingesetzt wird. Bevorzugt kommen die Materialien

in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole.

Cellulosefasermaterialien sind vorzugsweise Baumwolle, aber auch andere Pflanzenfasern, wie Leinen, Hanf, Jute und Ramiefasern ; regenerierte Cellulosefasern sind beispeisweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Verbindungen lassen sich auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie beispielsweise Natriumchlorid oder Natriumsulfat, sehr gute Farbausbeuten. Man färbt bei Temperaturen zwischen 40 und 100 °C, gegebenenfalls bei Temperaturen bis zu 120 °C unter Druck, gegebenenfalls in Gegenwart von üblichen Färbereihilfsmitteln, in wäßrigem Bad.

Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern erhält man farbstarke Drucke mit gutem Stand der Konturen und einem klaren Weißfond. Der Ausfall der Drucke ist von wechselnden Fixierbedingungen nur wenig abhängig. Die Druckverfahren können Einphasen-Verfahren sein, nach denen das Material mit einer beispielsweisen Natriumbicarbonat oder ein anderes säurebindendes Mittel und die erfindungsgemäße Verbindung enthaltenden Druckpaste bedruckt wird und die erfindungsgemäße Verbindung durch anschließendes Dämpfen bei 101 bis 103 °C auf der Faser fixiert wird, oder Zweiphasen-Verfahren sein, nach denen das Material beispielsweise mit neutraler oder schwach saurer Druckpaste, die die erfindungsgemäße Verbindung enthält, bedruckt wird und sodann die erfindungsgemäße Verbindung durch Hindurchführen des bedruckten Materials durch ein heißes elektrolythaltiges alkalisches Bad oder durch Überklotzen mit einer alkalischen elektrolythaltigen Klotzflotte und anschließendem Verweilen dieses überklotzten Materials oder anschließendem Dämpfen oder anschließender Behandlung mit Trockenhitze auf dem Material fixiert wird. Sowohl in der Färberei als auch in der Druckerei sind die mit den erfindungsgemäßen Verbindungen erhaltenen Fixiergrade hoch.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis 160 °C eingesetzt werden.

Die säurebindenden und die Fixierung der Farbstoffe auf den Cellulosefasern bewirkenden Mittel sind beispielsweise wasserlösliche basische Salze der Alkalimetalle und Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Natriumformiat, Natriumdihydrogenphosphat, Dinatriumhydrogenphosphat, Natrium-trichloracetat, Wasserglas und Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Faser gebunden ; insbesondere die Cellulosefärbungen zeigen nach der üblichen Nachbehandlung durch Spülen zur Entfernung von nicht fixierten Farbstoffanteilen ausgezeichnete Naßechtheiten.

Für das coloristische Verhalten der erfindungsgemäßen Verbindungen ist besonders hervorzuheben, daß sie sich durch gute Stabilität in Druckpasten und Klotzflotten, auch in Anwesenheit von Alkali, durch ein sehr gutes Ziehvermögen aus langer Flotte, durch guten Aufbau und hohe Fixiergeschwindigkeit nach den üblichen Färbe- und Druckverfahren, besonders bei niedrigen Temperaturen (d.h. Raumtemperatur und bis 50 °C), durch eine gleiche Farbtiefe beim Färben auf Baumwolle und Regeneratcellulosefasern, durch ein egales Warenbild der mit ihnen hergestellten Färbungen und Drucke und ebenfalls durch einen gleichmäßigen Ausfall der Färbungen aus langer Flotte bei Zugabe verschiedener Mengen an Elektrolyten auszeichnen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu

erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das zuerst schwach alkalisch eingestellte Bad eingebracht, dort einige Zeit bewegt, das Färbebad dann auf einen schwach sauren, vorzugsweise schwach essigsauren, pH-Wert eingestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden. Anschließend kann eine Nachbehandlung in ammoniakalischem Bad erfolgen.

Die mit den erfindungsgemäßen Verbindungen hergestellten Färbungen and Drucke zeichnen sich durch reine, vorwiegend blaue Farbtöne aus. Insbesondere die Färbungen und Drucke auf Cellulosefasermaterialien besitzen, wie bereits erwähnt, eine hohe Farbstärke, ebenso eine gute Licht-, Naßlicht- und Schweißlichtechtheit, gute Hypochloritbleich- und Chlorbadewasserechtheit, gute Bügel-, Überfärbe- und Reibechtheiten und weitere vorzügliche Naßechtheiten, wie Wasch-, Walk-, Alkali-, Säure- und Schweißechtheiten, und desweiteren eine gute Säurelagerstabilität.

Nicht fixierte Anteile an Farbstoff lassen sich leicht und vollständig wieder aus dem Fasermaterial auswaschen, was eine wesentliche Voraussetzung für die guten Naßechtheiten der erhältlichen Färbungen ist. Desweiteren sind die Färbungen gegen die üblichen Kunstharzappreturen stabil. Ein Teil der erfindungsgemäßen Verbindungen (Farbstoffe) sind in der Reinheit des Farbtones und wichtigen Echtheitseigenschaften mit Reaktivfarbstoffen der Anthrachinonreihe vergleichbar, sind darüber hinaus aber gut weißätzbar in Baumwollfondfärbungen.

Die nachstehenden Beispiele dienen zur Erläuterung der Erfindung. Die darin gennanten Teile sind Gewichtsteile, die Prozentangaben stellen Gewichtsprozente dar, sofern nichts anderes vermerkt. Gewichtsteile beziehen sich zu Volumenteilen wie Kilogramm zu Liter.

Die in den Beispielen formelmäßig beschriebenen Verbindungen sind in Form der freien Säuren angegeben ; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die Absorptionsmaxima ($\lambda_{max}$) der erfindungsgemäßen Verbindungen wurden in wäßriger Lösung bestimmt.

## Beispiel 1

a) 281 Teile 2-Amino-4-(2-hydroxyethylsulfonyl)-benzol-sulfonsäure werden in 500 Teilen Wasser und 500 Teilen Eis bei 0 bis 5 °C diazotiert. Die wäßrige Diazolösung gibt man zu einer Suspension aus 650 Teilen 40 %ige wäßrige Natriumbisulfitlösung und 180 Teilen 33 %ige wäßrige Natronlauge, rührt bei 20 bis 30 °C nach bis der Nachweis auf Diazoniumsalz negativ ist, heizt auf 60-70 °C hoch und gibt nach 1 Stunde 450 Teile 31 %ige wäßrige Salzsäure zu, erwärmt auf 100 °C und kocht bis zur vollständigen Verseifung des Disulfonates unter Rückfluß (ca. 3 h). Man läßt auf 50 bis 60 °C abkühlen und gibt 110 Teile Benzaldehyd zu. Die ausgefallene 2-(2-Benzylidenhydrazino)-4-(2-hydroxyethylsulfonyl)-benzolsulfonsäure wird bei 10-20 °C abgesaugt und bei 60-80 °C unter reduziertem Druck getrocknet.

b) 345 Teile der trockenen 2-(2-Benzyliden-hydrazino)-4-(2-hydroxyethylsulfonyl)-benzolsulfonsäure werden in 1 000 Teile Schwefelsäure (Monohydrat) eingetragen ; nach quantitativer Veresterung (nach 10 h) wird der Ansatz auf 2 500 Teile Eis gegeben. Die 2-(2-Benzyliden-hydrazino)-4-(2-sulfoethylsulfonyl)-benzolsulfonsäure kann nun daraus durch Ausfällen mit Natriumchlorid isoliert oder als wäßrige neutrale Lösung erhalten werden, indem man diese saure Lösung mit 900 Teilen Calciumcarbonat und etwa 100 Teilen Natriumcarbonat auf einen pH von 5 stellt und bei 60 °C vom Calciumsulfat absaugt.

c) 51 Teile 2-(2-Benzylidenhydrazino)-4-(2-sulfatoethylsulfonyl)-benzolsulfonsäure-Dinatriumsalz werden als wäßrige Lösung zu einer auf einen pH-Wert von 3 bis 4 gestellten Diazosuspension gegeben, die durch Diazotierung von 22 Teilen 6-Chlor-2-aminophenol-4-sulfonsäure erhalten wird. 25 Teile Kupfersulfat-pentahydrat werden zugegeben, wobei der pH-Wert mittels Natriumcarbonat bei 5 bis 5,5 und die Temperatur bei 15-20 °C gehalten wird. Es wird bei 20-25 °C nachgerührt, bis der Nachweis auf Diazoniumsalz negativ ist, und mittels Kieselgur und Filtration geklärt. Die erfindungsgemäße Verbindung wird mittels einem Elektrolyt, wie Natriumchlorid oder Kaliumchlorid, ausgefällt, abfiltriert, mit verdünnter wäßriger Natriumchloridlösung gewaschen und bei 60 bis 80 °C unter reduziertem Druck getrocknet.

Es wird ein dunkles, elektrolythaltiges Pulver des Alkalimetallsalzes (Natriumsalzes) der Verbindung entsprechend der Formel

(Siehe Formel Seite 11 f.)

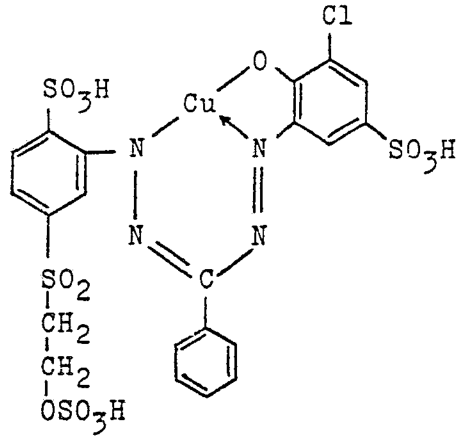

erhalten, das sich in Wasser mit dunkelblauer Farbe löst ($\lambda_{max}$ = 595 nm). Diese Verbindung eignet sich sehr gut als Farbstoff und färbt Baumwolle und regenerierte Cellulosefasern aus langer Flotte in Gegenwart eines säurebindenden Mittels in rotstichig blauen Farbtönen. Die in üblicher Weise nach 10-minütigem Seifen und Spülen mit Wasser nachbehandelten Färbungen erweisen sich als sehr licht- und naßecht. Von den Naßechtheiten können insbesondere die Wasch-, Walk- und Schweißechtheiten, die Chlorbleich- und die Chlorwasserechtheit, die Naßlicht- und Schweißlichtechtheit und die gute Stabilität von Drucken gegen saure Hydrolyse hervorgehoben werden. Auch die gute Weißätzbarkeit eines mittels dieses erfindungsgemäßen Farbstoffes gefärbter Baumwollfondfärbung ist hervorzuheben.

Beispiel 2

47 Teile 2-(2-Benzylidenhydrazino)-4-(2-sulfatoethylsulfonyl)-benzolsulfonsäure werden in 400 Teilen Wasser angeschlämmt und bei 10 bis 20 °C durch Zugabe von Natriumcarbonat bis zu einem pH-Wert von 5 gelöst, die Lösung zunächst mit der wäßrigen Diazosuspension aus 19 Teilen 2-Aminophenol-4-sulfonsäure, sodann mit 17 Teilen Natriumcarbonat und langsam innerhalb 15 Minuten bei 10 bis 15 °C mit einer Lösung von 25 Teilen Kupfersulfat-pentahydrat in 100 Teilen Wasser versetzt, wobei der pH mit weiteren 11 Teilen Natriumcarbonat bei einem Wert von 5 bis 5,5 gehalten wird. Man rührt zur vollständigen Kupplung bei 20 bis 25 °C nach, erwärmt dann auf 50 °C, klärt mit Kieselgur und durch Filtration und fällt die erfindungsgemäße Verbindung mittels Natriumchlorid oder Kaliumchlorid aus. Sie wird abfiltriert, mit verdünnter wäßriger Natriumchloridlösung nachgewaschen und getrocknet.

Es wird ein dunkles, elektrolythaltiges Pulver des Alkalimetallsalzes (Natriumsalzes) der Verbindung der allgemeinen Formel

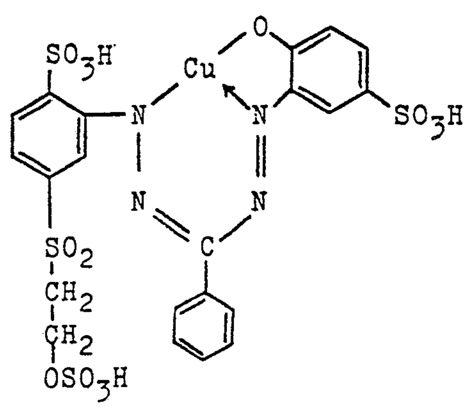

erhalten, das sich in Wasser mit dunkelblauer Farbe löst ($\lambda_{max}$ = 593 nm). Diese Verbindung eignet sich ebenfalls sehr gut als Farbstoff und zeigt die in Beispiel 1 angegebenen guten Echtheiten und Eigenschaften. Sie färbt Baumwolle in klaren rotstichig blauen Farbnuancen.

Beispiel 3

Man verfährt zur Herstellung einer erfindungsgemäßen Verbindung gemäß den Angaben des Beispieles 1 oder 2, setzt jedoch anstelle des dort verwendeten Diazoniumsalzes die Diazoniumverbindung von 2-Aminophenol-4,6-disulfonsäure in äquivalenter Menge ein. Man erhält das Alkalimetallsalz einer erfindungsgemäßen Verbindung entsprechend einer allgemeinen Formel (1a)

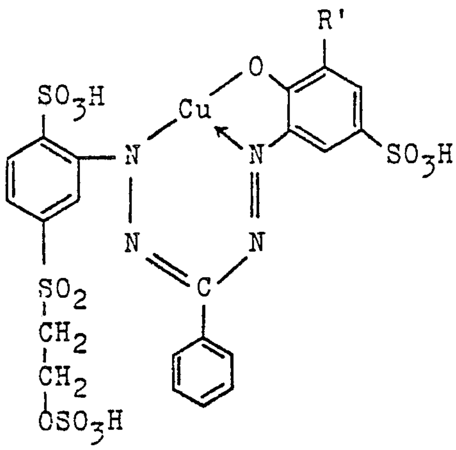

1a

in welcher R' die Sulfogruppe bedeutet. Sie löst sich in Wasser mit rotstichig blauer Farbe ($\lambda_{max}$ = 601 nm) und besitzt die in Beispiel 1 angegebenen guten Echtheiten und Eigenschaften. Sie färbt Baumwolle in blauen Farbnuancen.

Beispiel 4

Man verfährt zur Herstellung einer erfindungsgemäßen Verbindung gemäß den Angaben des Beispieles 1 oder 2, setzt jedoch anstelle des dort verwendeten Diazoniumsalzes die Diazoniumverbindung von 6-Acetamino-2-aminophenol-4-sulfonsäure in äquivalenter Menge ein. Man erhält das Alkalimetallsalz einer erfindungsgemäßen Verbindung entsprechend der in Beispiel 3 angegebenen allgemeinen Formel (1a), in welcher R' hier die Acetylaminogruppe bedeutet. Sie löst sich in Wasser mit rotstichig blauer Farbe ($\lambda_{max}$ = 600 nm) und besitzt die in Beispiel 1 angegebenen guten Echtheiten und Eigenschaften. Sie färbt Baumwolle in rotstichig blauen Farbnuancen.

Beispiel 5

Zu einer wäßrigen Diazolösung mit einem pH-Wert von 2 bis 3, die durch Diazotierung von 30 Teilen 4-(2-Sulfatoethylsulfonyl)-2-aminophenol in 500 Teilen Wasser hergestellt wird, gibt man unter Einhaltung eines pH-Wertes von 4,5 bis 6,0 47 Teile 2-(2-Benzylidenhydrazino)-4-(2-sulfatoethylsulfonyl)-benzolsulfonsäure und kurz danach 25 Teile Kupfersulfat-pentahydrat. Man rührt bei 20 bis 25 °C bis zur vollständigen Kupplung nach, klärt bei 40 °C, fällt die erfindungsgemäße Verbindung mittels Natriumchlorid, filtriert ab, wäscht mit verdünnter Natriumchloridlösung nach und trocknet den Rückstand.

Es wird ein dunkles, elektrolythaltiges Pulver des Alkalimetallsalzes (Natriumsalzes) der erfindungsgemäßen Verbindung entsprechend einer allgemeinen Formel (1b)

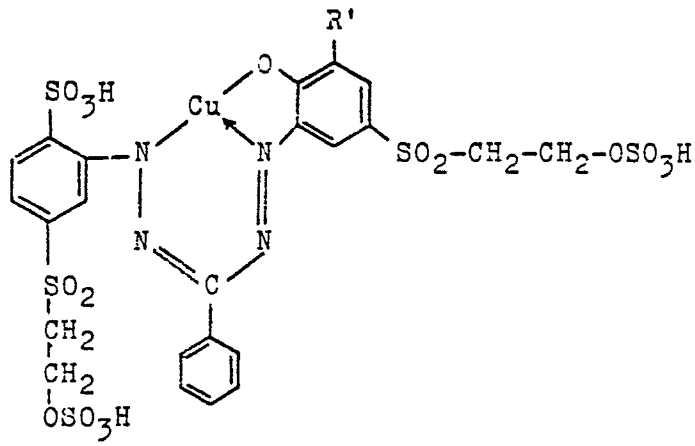

(1b)

erhalten, in welcher R' ein Wasserstoffatom bedeutet. Sie löst sich in Wasser mit dunkelblauer Farbe ($\lambda_{max}$ = 590 nm) und eignet sich gut als Farbstoff, der einen hohen Fixiergrad und die in Beispiel 1 angegebenen guten Echtheiten und Eigenschaften besitzt Baumwolle wird in rotstichig blauer Farbnuance gefärbt.

Beispiel 6

Man verfährt zur Herstellung einer erfindungsgemäßen Verbindung gemäß den Angaben eines der Beispiele 1 bis 5, setzt jedoch anstelle des dort verwendeten Diazoniumsalzes die Diazoniumverbindung von 4-(2-Sulfatoethylsulfonyl)-2-aminophenol-6-sulfonsäure in äquivalenter Menge ein. Man erhält das Alkalimetallsalz einer erfindungsgemäßen Verbindung entsprechend der in Beispiel 5 angegebenen allgemeinen Formel (1b), in welcher R' hier die Sulfogruppe bedeutet. Sie löst sich in Wasser mit rotstichig blauer Farbe ($\lambda_{max}$ = 598 nm) und besitzt die in Beispiel 1 angegebenen guten Echtheiten und Eigenschaften. Sie färbt Baumwolle ebenfalls in klaren grünstichig blauen Farbnuancen.

Beispiel 7

Man verfährt zur Herstellung einer erfindungsgemäßen Verbindung gemäß den Angaben des Beispieles 1 oder 2, setzt jedoch anstelle des dort verwendeten Diazoniumsalzes die Diazoniumverbindung von 5-(2-Sulfatoethylsulfonyl)-2-aminophenol in äquivalenter Menge ein. Man erhält das Alkalimetallsalz einer erfindungsgemäßen Verbindung der Formel

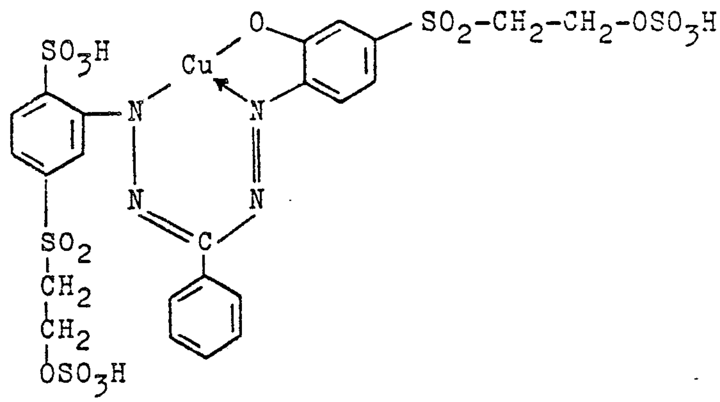

die sich in Wasser mit rotstichig blauer Farbe ($\lambda_{max}$ = 606 nm) löst. Sie besitzt die in Beispiel 1 angegebenen guten Echtheiten und Eigenschaften. Sie färbt Baumwolle ebenfalls in rotstichig blauen Farbnuancen.

Beispiel 8

a) 281 Teile 2-Amino-4-(2-hydroxyethylsulfonyl)-benzolsulfonsäure werden wie in Beispiel 1a diazotiert und mit neutraler Natriumsulfit-Natriumbisulfit-Suspension in das Hydrazindisulfonat überführt, bei 60 °C mit 150 Teilen 31 %iger wäßriger Salzsäure versetzt und auf 100 °C erwärmt. Bei gleichzeitiger Abdestillation von Wasser wird das Hydrazodisulfonat zur 2-Hydrazino-4-(2-hydroxyethylsulfonyl)-benzolsulfonsäure verseift. Nach Einengung auf ein Drittel des ursprünglichen Volumens wird abgekühlt, das ausgefallene Hydrazin abfiltriert und getrocknet.

b) 240 Teile 2-Hydrazino-4-(2-hydroxyethylsulfonyl)-benzol-sulfonsäure werden in 900 Teile Schwefelsäure (Monohydrat) eingetragen. Gegebenenfalls können noch 40 Teile 20 %iges Oleum nachgegeben werden. Man rührt 10 Stunden nach, rührt den Ansatz auf 3 000 Teile Eis und 1 000 Teile Wasser und isoliert das Hydrazin beispielsweise durch Neutralisation mit Calciumcarbonat als neutrale oder schwach saure Lösung oder durch Aussalzen mittels Natriumchlorid. Die ausgesalzene 2-Hydrazino-4-(2-sulfatoethylsulfonyl)-benzolsulfonsäure wird feucht weiterverarbeitet.

c) 38 Teile 2-Hydrazino-4-(2-sulfatoethylsulfonyl)-benzol-sulfonsäure werden in 300 Teile Wasser angeschlämmt und bis zu einem pH-Wert von 5,5 mit Natriumcarbonat gelöst. Es werden 22 Teile Benzaldehyd-4-sulfonsäure-Natriumsalz zugegeben, der Ansatz unter Einhaltung des pH-Wertes von 5 auf 60 °C erwärmt und eine Stunde nachgerührt.

d) Man Verfährt zur Herstellung einer erfindungsgemäßen Kupfer-Formazanverbindung analog der Verfahrensweise des Beispieles 1 c), setzt jedoch anstelle des dort verwendeten Hydrazonsalzes in wäßriger Lösung die wäßrige Lösung des zuvor unter Abschnitt c) dieses Beispieles hergestellten Lösung des Hydrazonsalzes ein. Man erhält die erfindungsgemäße Verbindung entsprechend der Formel

(Siehe Formel Seite 14 f.)

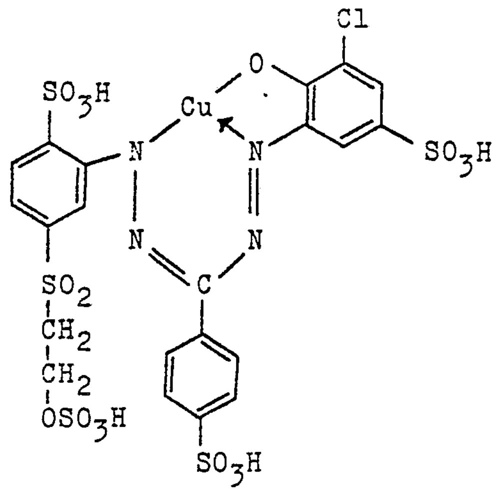

als deren Alkalimetallsalz (Natriumsalz) in Form eines elektrolythaltigen Pulvers.

Diese erfindungsgemäße Verbindung ($\lambda_{max}$ = 591 nm in wäßriger Lösung) besitzt ebenso sehr gute Farbstoffeigenschaften und färbt beispielsweise Cellulosefasermaterialien nach den in der Technik für faserreaktive Farbstoffe üblichen Applikations- und Fixiermethoden in rotstichig blauen Farbtönen mit guten Echtheiten.

Beispiel 9

Man verfährt zur Herstellung einer erfindungsgemäßen Verbindung gemäß den Angaben des Beispieles 8, setzt jedoch anstelle des dort verwendeten Diazoniumsalzes die Diazoniumverbindung von 2-Aminophenol-4-sulfonsäure in äquivalenter Menge ein. Man erhält das Alkalimetallsalz einer erfindungsgemäßen Verbindung entsprechend einer allgemeinen Formel (1c).

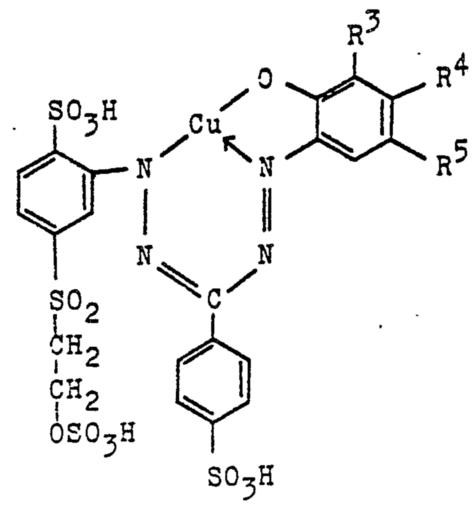

(1c)

in welcher $R^3$ und $R^4$ beide für ein Wasserstoffatom stehen und $R^5$ eine Sulfogruppe bedeutet. Sie löst sich in Wasser mit rotstichig blauer Farbe ($\lambda_{max}$ = 589 nm) und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 10

Man verfährt zur Herstellung einer erfindungsgemäßen Verbindung gemäß den Angaben des Beispieles 8, setzt jedoch anstelle des dort verwendeten Diazoniumsalzes die Diazoniumverbindung von 2-Aminophenol-4,6-disulfonsäure in äquivalenter Menge ein. Man erhält das Alkalimetallsalz einer erfindungsgemäßen Verbindung entsprechend der im Beispiel 9 angegebenen allgemeinen Formel (1c), in welcher $R^4$ ein Wasserstoffatom ist und $R^3$ und $R^5$ beide für eine Sulfogruppe stehen. Sie zeigt in

Wasser ein $\lambda_{max}$ von 597 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 11

Man verfährt zur Herstellung einer erfindungsgemäßen Verbindung gemäß den Angaben des Beispieles 8, setzt jedoch anstelle des dort verwendeten Diazoniumsalzes die Diazoniumverbindung von 6-Acetylamino-2-aminophenol-4-sulfonsäure in äquivalenter Menge ein. Man erhält das Alkalimetallsalz einer erfindungsgemäßen Verbindung entsprechend der im Beispiel 9 angegebenen allgemeinen Formel (1c), in welcher $R^3$ für die Acetylaminogruppe, $R^4$ für ein Wasserstoffatom und $R^5$ für eine Sulfogruppe stehen. Sie besitzt in Wasser ein $\lambda_{max}$ von 596 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 12

Man verfährt zur Herstellung einer erfindungsgemäßen Verbindung gemäß den Angaben des Beispieles 8, setzt jedoch anstelle des dort verwendeten Diazoniumsalzes die Diazoniumverbindung von 4-(2-Sulfatoethylsulfonyl)-2-aminophenol in äquivalenter Menge ein. Man erhält das Alkalimetallsalz einer erfindungsgemäßen Verbindung entsprechend der im Beispiel 9 angegebenen allgemeinen Formel (1c), in welcher $R^3$ und $R^4$ beide ein Wasserstoffatom bedeuten und $R^5$ für eine β-Sulfatoethylsulfonyl-Gruppe steht. Sie besitzt in Wasser ein $\lambda_{max}$ von 585 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 13

Man verfährt zur Herstellung einer erfindungsgemäßen Verbindung gemäß den Angaben des Beispieles 8, setzt jedoch anstelle des dort verwendeten Diazoniumsalzes die Diazoniumverbindung von 4-(2-Sulfatoethylsulfonyl)-2-aminophenol-6-sulfonsäure in äquivalenter Menge ein. Man erhält das Alkalimetallsalz einer erfindungsgemäßen Verbindung entsprechend der im Beispiel 9 angegebenen allgemeinen Formel (1c), in welcher $R^3$ eine Sulfogruppe bedeutet, $R^4$ ein Wasserstoffatom ist und $R^5$ für eine β-Sulfatoethylsulfonyl-Gruppe steht. Sie zeigt in Wasser ein $\lambda_{max}$ von 594 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 14

Man verfährt zur Herstellung einer erfindungsgemäßen Verbindung gemäß den Angaben des Beispieles 8, setzt jedoch anstelle des dort verwendeten Diazoniumsalzes die Diazoniumverbindung von 5-(2-Sulfatoethylsulfonyl)-2-aminophenol in äquivalenter Menge ein. Man erhält das Alkalimetallsalz einer erfindungsgemäßen Verbindung entsprechend der im Beispiel 9 angegebenen allgemeinen Formel (1c), in welcher $R^3$ und $R^5$ beide für ein Wasserstoffatom stehen und $R^4$ eine β-Sulfatoethylsulfonyl-Gruppe bedeutet. Sie zeigt in Wasser ein $\lambda_{max}$ von 602 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 15

a) 281 Teile 2-Amino-4-(2-hydroxyethylsulfonyl)-benzolsulfonyl)-benzolsulfonsäure werden wie in Beispiel 1a diazotiert und mit neutraler Natriumsulfit-Natriumbisulfit-Suspension in das Hydrazindisulfonat überführt, bei 60 °C mit 150 Teilen 32 %iger wäßriger Salzsäure versetzt und auf 100 °C erwärmt. Bei gleichzeitiger Abdestillation von Wasser wird das Hydrazodisulfonat zur 2-Hydrazino-4-(2-hydroxyethylsulfonyl)-benzolsulfonsäure verseift. Nach Einengung auf ein Drittel des ursprünglichen Volumens wird abgekühlt, das ausgefallene Hydrazin abfiltriert und getrocknet.

b) 240 Teile 2-Hydrazino-3-(2-hydroxyethylsulfonyl)-benzolsulfonsäure werden in 900 Teile Schwefelsäure (Monohydrat) eingetragen. Gegebenenfalls können noch 40 Teile 20 %iges Oleum nachgegeben werden. Man rührt 10 Stunden nach, rührt den Ansatz auf 3 000 Teile Eis und 1 000 Teile Wasser und isoliert das Hydrazin beispielsweise durch Neutralisation mit Calciumcarbonat als neutrale oder schwach saure Lösung oder durch Aussalzen mittels Natriumchlorid. Die ausgesalzene 2-Hydrazino-3-(2-sulfatoethylsulfonyl)-benzolsulfonsäure wird feucht weiterverarbeitet.

c) 38 Teile 2-Hydrazino-4-(2-sulfatoethylsulfonyl)-benzolsulfonsäure werden in 300 Teile Wasser angeschlämmt und bis zu einem pH-Wert von 5,5 mit Natriumcarbonat gelöst. Es werden 22 Teile

Benzaldehyd-3-sulfonsäure-Natriumsalz zugegeben, der Ansatz unter Einhaltung des pH-Wertes von 5 auf 60 °C erwärmt und eine Stunde nachgerührt.

d) Man verfährt zur Herstellung einer erfindungsgemäßen Kupfer-Formazanverbindung analog der Verfahrensweise des Beispieles 1 c), setzt jedoch anstelle des dort verwendeten Hydrazonsalzes in wäßriger Lösung die wäßrige Lösung des zuvor unter Abschnitt c) dieses Beispieles hergestellten Lösung des Hydrazonsalzes ein. Man erhält die erfindungsgemäße Verbindung entsprechend der Formel

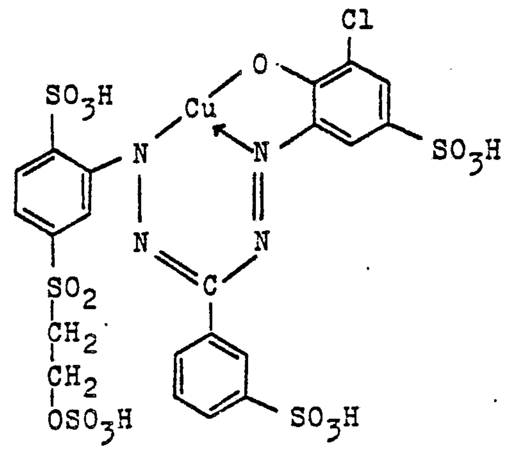

als deren Alkalimetallsalz (Natriumsalz) in Form eines elektrolythaltigen Pulvers. Diese erfindungsgemäße Verbindung ($\lambda_{max}$ û 591 nm in wäßriger Lösung) besitzt ebenso sehr gute Farbstoffeigenschaften und färbt beispielsweise Cellulosefasermaterialien nach den in der Technik für faserreaktive Farbstoffe üblichen Applikations- und Fixiermethoden in rotstichig blauen Farbtönen mit guten Echtheiten.

## Beispiel 16

Man verfährt zur Herstellung einer erfindungsgemäßen Verbindung gemäß den Angaben des Beispieles 15, setzt jedoch anstelle des dort verwendeten Diazoniumsalzes die Diazoniumverbindung von 2-Aminophenol-5-sulfonsäure in äquivalenter Menge ein. Man erhält das Alkalimetallsalz einer erfindungsgemäßen Verbindung entsprechend einer allgemeinen Formel (1d)

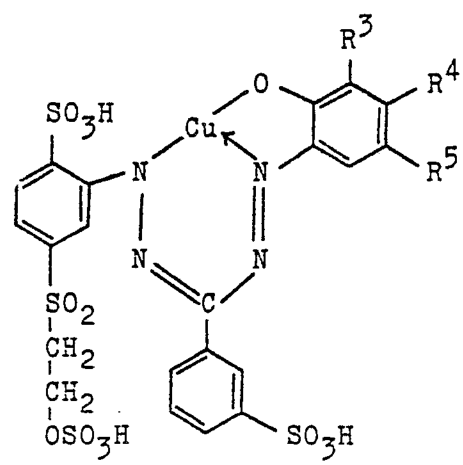

(1d)

in welcher $R^3$ und $R^4$ beide für ein Wasserstoffatom stehen und $R^5$ eine Sulfogruppe bedeutet. Sie zeigt in Wasser ein $\lambda_{max}$ von 597 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

## Beispiel 17

Man verfährt zur Herstellung einer erfindungsgemäßen Verbindung gemäß den Angaben des Beispieles 15, setzt jedoch anstelle des dort verwendeten Diazoniumsalzes die Diazoniumverbindung von 2-Aminophenol-4,6-disulfonsäure in äquivalenter Menge ein. Man erhält das Alkalimetallsalz einer erfindungsgemäßen Verbindung entsprechend der im Beispiel 16 angegebenen allgemeinen Formel (1d), in welcher $R^4$ ein Wasserstoffatom ist und $R^3$ und $R^5$ beide für eine Sulfogruppe stehen. Sie zeigt in

Wasser ein $\lambda_{max}$ von 597 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 18

Man verfährt zur Herstellung einer erfindungsgemäßen Verbindung gemäß den Angaben des Beispieles 15, setzt jedoch anstelle des dort verwendeten Diazoniumsalzes die Diazoniumverbindung von 6-Acetylamino-2-aminophenol-4-sulfonsäure in äquivalenter Menge ein. Man erhält das Alkalimetallsalz einer erfindungsgemäßen Verbindung entsprechend der im Beispiel 16 angegebenen allgemeinen Formel (1d), in welcher $R^3$ für die Acetylaminogruppe, $R^4$ für ein Wasserstoffatom und $R^5$ für eine Sulfogruppe stehen. Sie zeigt in Wasser ein $\lambda_{max}$ von 596 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 19

Man verfährt zur Herstellung einer erfindungsgemäßen Verbindung gemäß den Angaben des Beispieles 15, setzt jedoch anstelle des dort verwendeten Diazoniumsalzes die Diazoniumverbindung von 4-(2-Sulfatoethylsulfonyl)-2-aminophenol in äquivalenter Menge ein. Man erhält das Alkalimetallsalz einer erfindungsgemäßen Verbindung entsprechend der im Beispiel 16 angegebenen allgemeinen Formel (1d), in welcher $R^3$ und $R^4$ beide ein Wasserstoffatom bedeuten und $R^5$ für eine β-Sulfatoethylsulfonyl-Gruppe steht. Sie zeigt in Wasser ein $\lambda_{max}$ von 586 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 20

Man verfährt zur Herstellung einer erfindungsgemäßen Verbindung gemäß den Angaben des Beispieles 15, setzt jedoch anstelle des dort verwendeten Diazoniumsalzes die Diazoniumverbindung von 4-(2-Sulfatoethylsulfonyl)-2-aminophenol-6-sulfonsäure in äquivalenter Menge ein. Man erhält das Alkalimetallsalz einer erfindungsgemäßen Verbindung entsprechend der im Beispiel 16 angegebenen allgemeinen Formel (1d), in welcher $R^3$ eine Sulfogruppe bedeutet, $R^4$ ein Wasserstoffatom ist und $R^5$ für eine β-Sulfatoethylsulfonyl-Gruppe steht. Sie löst sich in Wasser mit rotstichig blauer Farbe ($\lambda_{max}$ = 594 nm) und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 21

Man verfährt zur Herstellung einer erfindungsgemäßen Verbindung gemäß den Angaben des Beispieles 15, setzt jedoch anstelle des dort verwendeten Diazoniumsalzes die Diazoniumverbindung von 5-(2-Sulfatoethylsulfonyl)-2-aminophenol in äquivalenter Menge ein. Man erhält das Alkalimetallsalz einer erfindungsgemäßen Verbindung entsprechend der im Beispiel 16 angegebenen allgemeinen Formel (1d), in welcher $R^4$ eine β-Sulfatoethylsulfonylgruppe ist und $R^3$ und $R^5$ beide für ein Wasserstoffatom stehen. Sie zeigt in Wasser ein $\lambda_{max}$ von 602 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 22

a) 281 Teile 2-Amino-5-(2-sulfatoethylsulfonyl)-benzolsulfonsäure werden in 3 000 Teilen Wasser/Eis bei 0 bis 5 °C diazotiert. Die Diazolösung wird zu einer Lösung von 700 Teilen Zinn-(II)-chlorid-dihydrat in 700 Teilen 31 %ige wäßrige Salzsäure gegeben ; nach 30-minütigem Nachrühren unterhalb von 10 °C wird mit 800 Teilen Natriumcarbonat ein pH-Wert von 5 eingestellt. Unter Einhaltung des pH-Wertes von 5 wird der Ansatz auf 50 °C erwärmt, von Zinndioxid abgesaugt, das Filtrat bei 50 bis 60 °C mit 110 Teilen Benzaldehyd versetzt und die Kondensationsreaktion bei dieser Temperatur zu Ende geführt. Es wird auf 10 bis 20 °C abgekühlt, die ausgefallene 2-(2-Benzylidenhydrazino)-5-(2-sulfatoethylsulfonyl)-benzolsulfonsäure abgesaugt und bei 60 °C getrocknet oder direkt feucht weiterverarbeitet.

b) Zur Herstellung einer erfindungsgemäßen Kupferformazanverbindung verfährt man gemäß der Verfahrensweise des Beispieles 1 : 47 Teile 2-(2-Benzylidenhydrazino)-5-(2-sulfatoethylsulfonyl)-benzolsulfonsäure werden mit der Lösung eines Diazoniumsalzes aus 38 Teilen 4-(2-Sulfatoethylsulfonyl)-2-aminophenol-6-sulfonsäure und mit 25 Teilen Kupfersulfatpentahydrat umgesetzt. Die erfindungsgemäße Verbindung wird mittels Natriumchlorid ausgefällt und isoliert.

Es wird ein dunkles, elektrolythaltiges Pulver des Alkalimetallsalzes (Natriumsalzes) der Verbindung der Formel

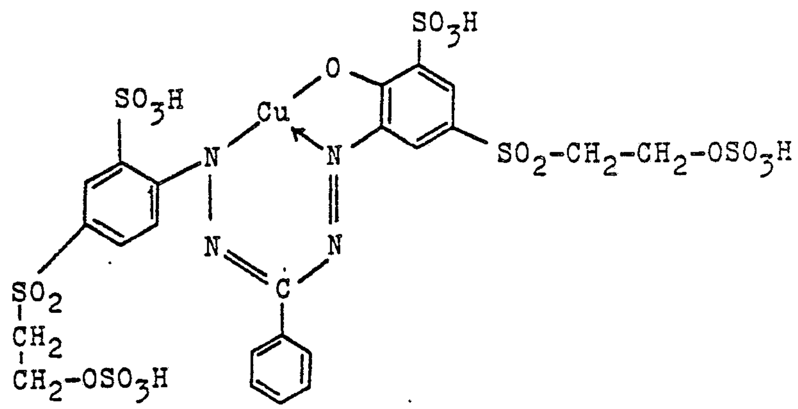

erhalten. Sie löst sich in Wasser mit dunkelblauer Farbe ($\lambda_{max}$ = 606 nm) und besitzt sehr gute Farbstoffeigenschaften. Sie färbt Baumwolle mit einem hohen Fixiergrad in klaren grünstichig blauen Farbnuancen und hat die in Beispiel 1 und in der Beschreibung angegebenen guten Echtheiten und Eigenschaften.

## Beispiele 23 bis 192

In den nachfolgenden Tabellenbeispielen sind weitere erfindungsgemäße Kupferkomplexformazanverbindungen mit Hilfe ihrer Ausgangskomponenten beschrieben. Sie lassen sich in erfindungsgemäßer Weise, beispielsweise gemäß einer der in den Ausführungsbeispielen beschriedenen Verfahrens-varianten, in ebenfalls guter Ausbeute durch Umsetzung einer kupferabgebenden Verbindung und der in den nachfolgenden Beispielen jeweils erwähnten Ausgangsverbindungen (der Arylhydrazinverbindung entsprechend der allgemeinen Formel (8), der Aldehydverbindung entsprechend der allgemeinen Formel (9) und der Aminophenol-Verbindung entsprechend der allgemeinen Formel (7) herstellen. Sie besitzen ebenfalls gute färberische Eigenschaften und lierfern Färbungen und Drucke auf Polyamid- und Polyurethanfasermaterialien, insbesondere auf Cellulosefasermaterialien, mit den in dem jeweiligen Tabellenbeispiel angegebenen Farbtönen in guten Echtheiten.

(Siehe Tabelle Seite 19 ff.)

Verbindungen der allgemeinen Formel (1) aus:

| Bsp. | Hydrazinkomponente (8) | Aldehydkomponente (9) | Aminophenol (7) | Farbton auf Cellulose ($\lambda_{max}$) |
|---|---|---|---|---|
| 23 | 2-Hydrazino-4-(2-sulfatoethylsulfonyl)-benzolsulfonsäure | Benzaldehyd | 2-Aminophenol-4-sulfonsäureamid | rotstichig blau |
| 24 | dito | dito | 2-Aminophenol-5-sulfonsäure | rotstichig blau (601) |
| 25 | dito | dito | 6-Sulfo-2-aminophenol-4-sulfonsäureamid | grünstichig blau |
| 26 | dito | dito | 2-Aminophenol-3,5-disulfonsäure | blaustichig grün (638) |
| 27 | dito | dito | 2-Aminophenol-4-sulfonsäuredimethylamid | rotstichig blau |
| 28 | dito | dito | 6-Nitro-2-aminophenol-4-sulfonsäure | grünstichig blau (605) |
| 29 | dito | dito | 6-Methyl-2-aminophenol-4-sulfonsäure | rotstichig blau |
| 30 | dito | dito | 6-Carboxy-2-aminophenol-4-sulfonsäure | rotstichig blau |
| 31 | dito | dito | 4-Chlor-2-aminophenol-6-sulfonsäure | rotstichig blau |

Verbindungen der allgemeinen Formel (1) aus:

| Bsp. | Hydrazinkomponente (8) | Aldehydkomponente (9) | Aminophenol (7) | Farbton |
|---|---|---|---|---|
| 32 | 2-Hydrazino-4-(2-sulfatoethylsulfonyl)-benzolsulfonsäure | Benzaldehyd | 1-Amino-2-naphthol-4,6-disulfonsäure | blaustichig grün (643) |
| 33 | dito | dito | 2-Amino-1-naphthol-4-sulfonsäure | grünstichig blau |
| 34 | dito | dito | 4-Acetamino-2-aminophenol-6-sulfonsäure | rotstichig blau |
| 35 | dito | dito | 4-Methyl-2-aminophenol-6-sulfonsäure | rotstichig blau |
| 36 | dito | dito | 4-(2-Phosphatoethylsulfonyl)-2-aminophenol | rotstichig blau |
| 37 | dito | dito | 5-(N-2-Sulfatoethylsulfonyl-N-methyl-amino)-2-aminophenol | grünstichig blau |
| 38 | dito | dito | 4-(2-Thiosulfatoethylsulfonyl)-2-aminophenol-6-sulfonsäure | grünstichig blau (606) |
| 39 | dito | dito | 4-(2-Sulfatoethylsulfonyl)-6-nitro-2-aminophenol | blaustichig grün |

Verbindungen der allgemeinen Formel (1) aus:

| Bsp. | Hydrazinkomponente (8) | Aldehydkomponente (9) | Aminophenol (7) | Farbton |
|---|---|---|---|---|
| 40 | 2-Hydrazino-4-(2-sulfatoethylsulfonyl)-benzolsulfonsäure | Benzaldehyd | 4-(2-Sulfato-ethylsulfonyl)-6-methyl-2-amino-phenol | rotstichig blau |
| 41 | dito | dito | 4-(2-Sulfato-ethylsulfonyl)-6-chlor-2-amino-phenol | rotstichig blau |
| 42 | dito | dito | 4-Ethylsulfonyl-2-aminophenol | rotstichig blau |
| 43 | dito | dito | 4-Ethylsulfonyl-2-aminophenol-6-sulfonsäure | rotstichig blau |
| 44 | dito | dito | 4-Vinylsulfonyl-2-aminophenol-6-sulfonsäure | grünstichig blau |
| 45 | dito | 4-Chlor-benzaldehyd | 2-Aminophenol-4-sulfonsäure | rotstichig blau |
| 46 | dito | dito | 2-Aminophenol-5-sulfonsäure | rotstichig blau |
| 47 | dito | dito | 2-Aminophenol-4,6-disulfonsäure | grünstichig blau |
| 48 | dito | Benzaldehyd-3-sulfonsäure | 4-Chlor-2-amino-phenol | grünstichig blau |

Verbindungen der allgemeinen Formel (1) aus:

| Bsp. | Hydrazinkomponente (8) | Aldehydkomponente (9) | Aminophenol (7) | Farbton |
|---|---|---|---|---|
| 49 | 2-Hydrazino-4-(2-sulfatoethylsulfonyl)-benzolsulfonsäure | 4-Chlor-benzaldehyd | 6-Chlor-2-amino-phenol-4-sulfonsäure | rotstichig blau |
| 50 | dito | dito | 6-Methyl-2-amino-phenol-4-sulfon säure | rotstichig blau |
| 51 | dito | dito | 6-Acetamino-2-aminophenol-4-sulfonsäure | rotstichig blau |
| 52 | dito | dito | 4-(2-Sulfato-ethylsulfonyl)-2-aminophenol | rotstichig blau |
| 53 | dito | dito | 5-(2-Sulfato-ethylsulfonyl)-2-aminophenol | rotstichig blau |
| 54 | dito | dito | 4-(2-Sulfato-ethylsulfonyl)-2-aminophenol-6-sulfonsäure | rotstichig blau |
| 55 | dito | dito | 4-Ethylsulfonyl-2-aminophenol | rotstichig blau |
| 56 | dito | dito | 4-Ethylsulfonyl-2-aminophenol-6-sulfonsäure | rotstichig blau |
| 57 | dito | Benzaldehyd-3-sulfonsäure | 4,6-Dinitro-2-aminophenol | blaustichig grün |

Verbindungen der allgemeinen Formel (1) aus :

| Bsp. | Hydrazinkomponente (8) | Aldehydkomponente (9) | Aminophenol (7) | Farbton |
|---|---|---|---|---|
| 58 | 2-Hydrazino-4-(2-sulfatoethylsulfonyl)-benzol-sulfonsäure | 4-Methyl-benzaldehyd | 2-Aminophenol-4-sulfonsäure | rotstichig blau |
| 59 | dito | dito | 2-Aminophenol-5-sulfonsäure | rotstichig blau |
| 60 | dito | dito | 2-Aminophenol-4,6-disulfonsäure | rotstichig blau |
| 61 | dito | dito | 6-Chlor-2-amino-phenol-4-sulfon-säure | rotstichig blau |
| 62 | dito | dito | 6-Methyl-2-amino-phenol-4-sulfon-säure | rotstichig blau |
| 63 | dito | dito | 6-Acetamino-2-aminophenol-4-sulfonsäure | rotstichig blau |
| 64 | dito | dito | 4-(2-Sulfato-ethylsulfonyl-2-aminophenol | rotstichig blau |
| 65 | dito | dito | 5-(2-Sulfato-ethylsulfonyl)-2-aminophenol | rotstichig blau |
| 66 | dito | dito | 4-(2-Sulfato-ethylsulfonyl)-2-aminophenol-6-sulfonsäure | rotstichig blau |

Verbindungen der allgemeinen Formel (1) aus:

| Bsp. | Hydrazinkomponente (8) | Aldehydkomponente (9) | Aminophenol (7) | Farbton |
|---|---|---|---|---|
| 67 | 2-Hydrazino-4-(2-sulfatoethylsulfonyl)-benzol-sulfonsäure | 4-Methyl-benzaldehyd | 4-Ethylsulfonyl-2-aminophenol | rotstichig blau |
| 68 | dito | dito | 4-Ethylsulfonyl-2-aminophenol-6-sulfonsäure | rotstichig blau |
| 69 | dito | Benzaldehyd-4-sulfonsäure | 4-(2-Sulfatoethylsulfonyl)-2-aminophenol | rotstichig blau (585) |
| 70 | dito | Benzaldehyd-3-sulfonsäure | dito | rotstichig blau |
| 71 | dito | Benzaldehyd-2-sulfonsäure | dito | rotstichig blau (571) |
| 72 | dito | Benzaldehyd-2,4-disulfonsäure | dito | rotstichig blau |
| 73 | dito | 4-Methyl-benzaldehyd-3-sulfonsäure | dito | rotstichig blau |
| 74 | dito | 2-Chlor-benzaldehyd-3-sulfonsäure | dito | rotstichig blau |
| 75 | dito | 3-Chlor-benzaldehyd | dito | rotstichig blau |
| 76 | dito | 4-Chlor-benzaldehyd-2-sulfonsäure | dito | rotstichig blau |

Verbindungen der allgemeinen Formel (1) aus:

| Bsp. | Hydrazinkomponente (8) | Aldehydkomponente (9) | Aminophenol (7) | Farbton |
|---|---|---|---|---|
| 77 | 2-Hydrazino-4-(2-sulfatoethylsulfonyl)-benzol-sulfonsäure | 4-Carboxy-benzaldehyd | 4-(2-Sulfato-ethylsulfonyl)-2-amino-phenol | rotstichig blau |
| 78 | dito | 3-Methoxy-benzaldehyd | dito | rotstichig blau |
| 79 | dito | 2-Methoxy-benzaldehyd | dito | rotstichig blau |
| 80 | dito | 4-Methoxy-benzaldehyd | dito | rotstichig blau |
| 81 | dito | 3-Methyl-benzaldehyd | dito | rotstichig blau |
| 82 | dito | 2-Methyl-benzaldehyd | dito | rotstichig blau |
| 83 | dito | 2-Chlor-benzaldehyd | dito | rotstichig blau |
| 84 | dito | 2-Hydroxy-benzaldehyd | dito | rotstichig blau |
| 85 | dito | Benzaldehyd-3-sulfonsäure | 4-Ethylsulfonyl-2-aminophenol | grünstichig blau |
| 86 | dito | dito | 4-Ethylsulfonyl-2-aminophenol-6-sulfonsäure | grünstichig blau |
| 87 | dito | dito | 6-Acetamino-2-aminophenol-4-sulfonsäure | grünstichig blau |

Verbindungen der allgemeinen Formel (1) aus:

| Bsp. | Hydrazinkomponente (8) | Aldehydkomponente (9) | Aminophenol (7) | Farbton |
|---|---|---|---|---|
| 88 | 2-Hydrazino-4-(2-sulfatoethylsulfonyl)-benzol-sulfonsäure | Benzaldehyd-3-sulfonsäure | 6-Methyl-2-amino-phenol-4-sulfonsäure | grünstichig blau |
| 89 | dito | dito | 5-(2-Sulfato-ethylsulfonyl)-2-aminophenol | grünstichig blau (602) |
| 90 | dito | Benzaldehyd-4-sulfonsäure | dito | rotstichig blau |
| 91 | dito | Benzaldehyd-2-sulfonsäure | dito | rotstichig blau (585) |
| 92 | dito | Benzaldehyd-4-sulfonsäure | 4-Methylsulfonyl-2-aminophenol | rotstichig blau |
| 93 | dito | dito | 4-Methylsulfonyl-2-aminophenol-6-sulfonsäure | rotstichig blau |
| 94 | dito | dito | 4-Acetamino-2-aminophenol-6-sulfonsäure | rotstichig blau |
| 95 | dito | dito | 6-Methyl-2-amino-phenol-4-sulfonsäure | rotstichig blau |
| 96 | dito | dito | 4-(2-Sulfato-ethylsulfonyl)-2-aminophenol-6-sulfonsäure | rotstichig blau |

Verbindungen der allgemeinen Formel (1) aus:

| Bsp. | Hydrazinkomponente (8) | Aldehydkomponente (9) | Aminophenol (7) | Farbton |
|---|---|---|---|---|
| 97 | 2-Hydrazino-4-(2-sulfatoethylsulfonyl)-benzol-sulfonsäure | 2-Methoxy-benzaldehyd | 4-(2-Sulfato-ethylsulfonyl)-2-aminophenol-6-sulfonsäure | rotstichig blau |
| 98 | dito | Benzaldehyd-3-sulfon-säure | dito | grünstichig blau |
| 99 | dito | 3-Methoxy-benzaldehyd | dito | grünstichig blau |
| 100 | dito | 4-Methoxy-benzaldehyd | dito | rotstichig blau |
| 101 | dito | 4-Methoxy-3-chlor-benzaldehyd | dito | grünstichig blau |
| 102 | dito | 3-Methyl-benzaldehyd | dito | grünstichig blau |
| 103 | dito | 2-Methyl-benzaldehyd | dito | rotstichig blau |
| 104 | dito | 2,4-Dichlor-benzyldehyd | dito | rotstichig blau |
| 105 | dito | 2-Chlorbenzaldehyd | dito | rotstichig blau |
| 106 | dito | 3-Chlor-benzaldehyd | dito | rotstichig blau |
| 107 | dito | 2-Hydroxy-benzaldehyd | dito | grünstichig blau |
| 108 | dito | 3-Hydroxy-benzaldehyd | dito | grünstichig blau |

Verbindungen der allgemeinen Formel (1) aus:

| Bsp. | Hydrazinkomponente (8) | Aldehydkomponente (9) | Aminophenol (7) | Farbton |
|---|---|---|---|---|
| 109 | 2-Hydrazino-4-(2-sulfatoethylsulfonyl)-benzol-sulfonsäure | Benzaldehyd-4-sulfonsäure | 4,6-Dichlor-2-aminophenol | rotstichig blau |
| 110 | dito | 4-Hydroxy-benzaldehyd | 4-(2-Sulfato-ethylsulfonyl)-2-aminophenol-6-sulfonsäure | grünstichig blau |
| 111 | dito | 4-(2-Sulfatoethyl-sulfonyl)-benzaldehyd | dito | rotstichig blau |
| 112 | dito | 1-Naphthaldehyd | dito | grünstichig blau |
| 113 | dito | 2-Naphthaldehyd | dito | grünstichig blau |
| 114 | dito | Furan-2-aldehyd | dito | rotstichig blau |
| 115 | dito | Benzaldehyd-4-sulfonsäure | 2-Aminophenol-4-sulfonsäure | rotstichig blau (589) |
| 116 | dito | Benzaldehyd-3-sulfonsäure | dito | grünstichig blau |
| 117 | dito | 4-Methyl-benzaldehyd-3-sulfonsäure | dito | grünstichig blau |
| 118 | dito | 2-Chlor-benzaldehyd-3-sulfonsäure | dito | rotstichig blau |
| 119 | dito | 3-Methoxy-benzaldehyd | dito | rotstichig blau |

Verbindungen der allgemeinen Formel (1) aus:

| Bsp. | Hydrazinkomponente (8) | Aldehydkomponente (9) | Aminophenol (7) | Farbton |
|---|---|---|---|---|
| 120 | 2-Hydrazino-4-(2-sulfatoethylsulfonyl)-benzol-sulfonsäure | 4-Methoxy-benzaldehyd | 2-Aminophenol-4-sulfonsäure | grünstichig blau |
| 121 | dito | 3-Methyl-benzaldehyd | dito | grünstichig blau |
| 122 | dito | 2-Methyl-benzaldehyd | dito | rotstichig blau |
| 123 | dito | 4-(2-Sulfatoethyl-sulfonyl)-benzaldehyd | dito | rotstichig blau (584) |
| 124 | dito | Benzaldehyd-4-sulfonsäure | 6-Chlor-2-amino-phenol-4-sulfonsäure | rotstichig blau |
| 125 | dito | Benzaldehyd-3-sulfonsäure | dito | grünstichig blau |
| 126 | dito | Benzaldehyd-4-sulfonsäure | 2-Aminophenol-4,6-disulfonsäure | rotstichig blau |
| 127 | dito | Benzaldehyd-3-sulfonsäure | dito | grünstichig blau |
| 128 | dito | 3-Methoxy-benzaldehyd | dito | grünstichig blau |
| 129 | dito | 2-Methoxy-benzaldehyd | dito | rotstichig blau |
| 130 | dito | 2-Methyl-benzaldehyd | dito | rotstichig blau |

Verbindungen der allgemeinen Formel (1) aus:

| Bsp. | Hydrazinkomponente (8) | Aldehydkomponente (9) | Aminophenol (7) | Farbton |
|---|---|---|---|---|
| 131 | 2-Hydrazino-4-(2-sulfatoethylsulfonyl)-benzol-sulfonsäure | 4-(2-Sulfatoethylsulfonyl)-benzaldehyd | 2-Aminophenol-4,6-disulfonsäure | rotstichig blau (593) |
| 132 | 2-Hydrazino-4-(2-sulfatoethylsulfonyl)-benzol-1,5-disulfonsäure | Benzaldehyd | 4-(2-Sulfatoethylsulfonyl)-2-aminophenol | grünstichig blau |
| 133 | dito | dito | 2-Aminophenol-4-sulfonsäure | grünstichig blau |
| 134 | dito | dito | 5-(2-Sulfatoethylsulfonyl)-2-aminophenol | grünstichig blau |
| 135 | 2-Hydrazino-5-(2-sulfatoethylsulfonyl)-benzolsulfonsäure | dito | 2-Aminophenol-4-sulfonsäure | grünstichig blau (601) |
| 136 | dito | dito | 2-Aminophenol-5-sulfonsäure | grünstichig blau |
| 137 | dito | dito | 2-Aminophenol-4,6-disulfonsäure | grünstichig blau (610) |
| 138 | dito | dito | 6-Nitro-2-aminophenol-4-sulfonsäure | grünstichig blau (613) |
| 139 | dito | dito | 6-Chlor-2-aminophenol-4-sulfonsäure | rotstichig blau (604) |

Verbindungen der allgemeinen Formel (1) aus :

| Bsp. | Hydrazinkomponente (8) | Aldehydkomponente (9) | Aminophenol (7) | Farbton |
|---|---|---|---|---|
| 140 | 2-Hydrazino-5-(2-sulfatoethylsulfonyl)-benzolsulfonsäure | Benzaldehyd | 6-Acetamino-2-aminophenol-4-sulfonsäure | rotstichig blau (605) |
| 141 | dito | dito | 6-Methyl-2-aminophenol-4-sulfonsäure | rotstichig blau |
| 142 | dito | dito | 4-(2-Sulfatoethylsulfonyl)-2-aminophenol | rotstichig blau (597) |
| 143 | dito | dito | 5-(2-Sulfatoethylsulfonyl)-2-aminophenol | rotstichig blau (616) |
| 144 | dito | dito | 4-(2-Thiosulfatoethylsulfonyl)-2-aminophenol-6-sulfonsäure | grünstichig blau (606) |
| 145 | dito | dito | 4-Ethylsulfonyl-2-aminophenol | rotstichig blau |
| 146 | dito | dito | 4-Ethylsulfonyl-2-aminophenol-6-sulfonsäure | grünstichig blau |
| 147 | dito | dito | 2-Aminophenol-4-sulfonsäureamid | rotstichig blau |

Verbindungen der allgemeinen Formel (1) aus :

| Bsp. | Hydrazinkomponente (8) | Aldehydkomponente (9) | Aminophenol (7) | Farbton |
|---|---|---|---|---|
| 148 | 2-Hydrazino-5-(2-sulfatoethylsulfonyl)-benzolsulfonsäure | Benzaldehyd-4-sulfonsäure | 4-(2-Sulfatoethylsulfonyl)-2-aminophenol | rotstichig blau (585) |
| 149 | dito | Benzaldehyd | 2-Aminophenol-4-sulfonsäure-dimethylamid | rotstichig blau |
| 150 | dito | dito | 4-Vinylsulfonyl-2-aminophenol-6-sulfonsäure | grünstichig blau (606) |
| 151 | dito | Benzaldehyd-4-sulfonsäure | 5-(2-Sulfatoethylsulfonyl)-2-aminophenol | rotstichig blau |
| 152 | dito | dito | 4-(2-Sulfatoethylsulfonyl)-2-aminophenol-6-sulfonsäure | rotstichig blau |
| 153 | dito | dito | 2-Aminophenol-4-sulfonsäure | rotstichig blau (589) |
| 154 | dito | dito | 2-Aminophenol-4,6-disulfosäure | rotstichig blau |
| 155 | dito | dito | 2-Aminophenol-4-ethylsulfon | rotstichig blau |
| 156 | dito | dito | 2-Aminophenol-4-ethylsulfon-6-sulfonsäure | rotstichig blau |

Verbindungen der allgemeinen Formel (1) aus :

| Bsp. | Hydrazinkomponente (8) | Aldehydkomponente (9) | Aminophenol (7) | Farbton |
|---|---|---|---|---|
| 157 | 2-Hydrazino-5-(2-sulfatoethylsulfonyl)-benzolsulfonsäure | Benzaldehyd-4-sulfonsäure | 6-Chlor-2-aminophenol-4-sulfonsäure | rotstichig blau |
| 158 | dito | dito | 6-Acetylamino-2-aminophenol-4-sulfonsäure | rotstichig blau |
| 159 | dito | dito | 2-Aminophenol-4-sulfonsäureamid | rotstichig blau |
| 160 | dito | dito | 2-Aminophenol-4-dimethylsulfonamid | rotstichig blau |
| 161 | dito | Benzaldehyd-2-sulfonsäure | 4-(2-Sulfatoethylsulfonyl)-2-aminophenol | rotstichig blau |
| 162 | dito | dito | 5-(2-Sulfatoethylsulfonyl)-2-aminophenol | rotstichig blau |
| 163 | dito | dito | 2-Aminophenol-4-sulfonsäure | rotstichig blau |
| 164 | dito | dito | 2-Aminophenol-4,6-disulfonsäure | rotstichig blau |
| 165 | dito | dito | 6-Chlor-2-aminophenol-4-sulfonsäure | rotstichig blau |

Verbindungen der allgemeinen Formel (1) aus :

| Bsp. | Hydrazinkomponente (8) | Aldehydkomponente (9) | Aminophenol (7) | Farbton |
|---|---|---|---|---|
| 166 | 2-Hydrazino-5-(2-sulfatoethylsulfonyl)-benzolsulfonsäure | Benzaldehyd-3-sulfonsäure | 4-(2-Sulfatoethylsulfonyl)-2-aminophenol-6-sulfonsäure | grünstichig blau |
| 167 | dito | dito | 2-Aminophenol-4-sulfonsäure | grünstichig blau |
| 168 | dito | dito | 2-Aminophenol-4,6-disulfonsäure | grünstichig blau |
| 169 | dito | dito | 2-Aminophenol-4-ethylsulfon | grünstichig blau |
| 170 | dito | dito | 6-Sulfo-2-aminophenol-4-ethylsulfon | grünstichig blau |
| 171 | dito | dito | 6-Acetylamino-2-aminophenol-4-sulfonsäure | grünstichig blau |
| 172 | dito | dito | 2-Aminophenol-4-sulfonsäureamid | grünstichig blau |
| 173 | dito | dito | 2-Aminophenol-4-dimethylsulfonamid | grünstichig blau |
| 174 | dito | dito | 6-Chlor-2-aminophenol-4-sulfonsäure | grünstichig blau |

Verbindungen der allgemeinen Formel (1) aus :

| Bsp. | Hydrazinkomponente (8) | Aldehydkomponente (9) | Aminophenol (7) | Farbton |
|---|---|---|---|---|
| 175 | 2-Hydrazino-5-(2-sulfatoethylsulfonyl)-benzolsulfonsäure | Benzaldehyd-2,4-sulfonsäure | 4-(2-Sulfato-ethylsulfonyl)-2-aminophenol | rotstichig blau |
| 176 | dito | 4-Methyl-benzaldehyd | 4-(2-Sulfato-ethylsulfonyl)-2-aminophenol-6-sulfonsäure | grünstichig blau |
| 177 | dito | dito | 5-(2-Sulfato-ethylsulfonyl)-2-aminophenol | grünstichig blau |
| 178 | dito | dito | 2-Aminophenol-4-sulfonsäure | grünstichig blau |
| 179 | dito | dito | 2-Aminophenol-4,6-disulfonsäure | grünstichig blau |
| 180 | dito | dito | 6-Chlor-2-amino-phenol-4-sulfon-säure | grünstichig blau |
| 181 | dito | dito | 2-Aminophenol-4-ethylsulfon-6-sulfonsäure | grünstichig blau |
| 182 | dito | 4-Chlor-benzaldehyd | 4-(2-Sulfato-ethylsulfonyl)-2-aminophenol | rotstichig blau |
| 183 | dito | dito | 5-(2-Sulfato-ethylsulfonyl)-2-aminophenol | rotstichig blau |

Verbindungen der allgemeinen Formel (1) aus :

| Bsp. | Hydrazinkomponente (8) | Aldehydkomponente (9) | Aminophenol (7) | Farbton |
|---|---|---|---|---|
| 184 | 2-Hydrazino-5-(2-sulfatoethylsulfonyl)-benzolsulfonsäure | 4-Chlor-benzaldehyd | 4-(2-Sulfato-ethylsulfonyl)-2-aminophenol-6-sulfonsäure | rotstichig blau |
| 185 | dito | dito | 2-Aminophenol-4-sulfonsäure | rotstichig blau |
| 186 | dito | dito | 2-Aminophenol-4,6-disulfonsäure | grünstichig blau |
| 187 | dito | dito | 6-Chlor-2-amino-phenol-4-sulfonsäure | grünstichig blau |
| 188 | dito | dito | 2-Aminophenol-4-ethylsulfon-6-sulfonsäure | grünstichig blau |
| 189 | dito | Benzaldehyd-2-sulfonsäure | 2-Aminophenol-4-ethylsulfon | rotstichig blau |
| 190 | dito | Benzaldehyd-3-sulfonsäure | 4-(2-Sulfato-ethylsulfonyl)-2-aminophenol | grünstichig blau |
| 191 | dito | dito | 5-(2-Sulfato-ethylsulfonyl)-2-aminophenol | grünstichig blau |
| 192 | 2-Hydrazino-4-(2-sulfatoethylsulfonyl)-benzol-sulfonsäure | 2-Methoxy-benzaldehyd | 2-Aminophenol-4-sulfonsäure | rotstichig blau |

Beispiel 193

a) 281 Teile 2-Amino-4-(2-hydroxyethylsulfonyl)-benzolsulfonsäure werden wie in Beispiel 1a diazotiert und mit neutraler Natriumsulfit-Natriumbisulfit-Suspension in das Hydrazindisulfonat überführt, bei 60 °C mit 150 Teilen 31 %iger wäßriger Salzsäure versetzt und auf 100 °C erwärmt. Bei gleichzeitiger Abdestillation von Wasser wird das Hydrazodisulfonat zur 2-Hydrazino-4-(2-hydroxyethylsulfonyl)-benzolsulfonsäure verseift. Nach Einengung auf ein Drittel des ursprünglichen Volumens wird abgekühlt, das ausgefallene Hydrazin abfiltriert und getrocknet.

b) 237 Teile 2-Hydrazino-4-(2-hydroxyethylsulfonyl)-benzolsäure werden in 1 200 Teilen Wasser angerührt, mit 140 Teilen einer 33 %igen wäßrigen Natronlauge bei einem pH-Wert von 6 gelöst und nach Zugabe von 180 Teilen 4-(2-Hydroxyethylsulfonyl)-benzaldehyd bei einer Temperatur von 60 °C zur 2-(4-β-Hydroxyethylsulfonyl-benzylidenhydrazino)-4-(β-sulfatoethylsulfonyl)-benzolsulfonsäure umgesetzt, die durch Aussalzen mit Natriumchlorid als Natriumsalz isoliert wird.

c) 345 Teile des im Abschnitt b) hergestellten Hydrazons werden in 1 000 Teilen Schwefelsäure (Monohydrat) eingetragen. Zur Vervollständigung der Veresterung wird noch 10 Stunden nachgerührt, der Ansatz sodann auf Eis gegeben, die Esterverbindung mit Natriumchlorid ausgesalzen und abgesaugt.

d) Man verfährt zur Herstellung einer erfindungsgemäßen Kupfer-Formazanverbindung analog der Verfahrensweise des Beispieles 1 c), setzt jedoch anstelle des dort verwendeten Hydrazonsalzes in wäßriger Lösung die wäßrige Lösung des zuvor unter Abschnitt c) dieses Beispieles hergestellten Lösung des Hydrazonsalzes ein. Man erhält die erfindungsgemäße Verbindung entsprechend der Formel

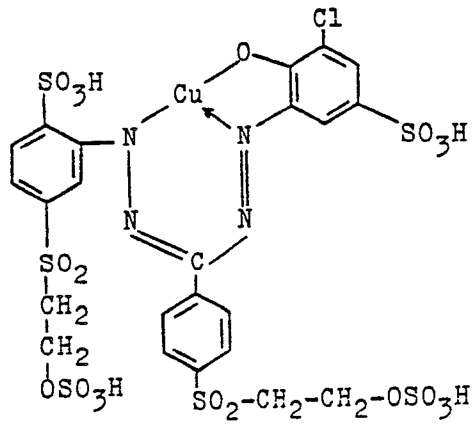

als deren Alkalimetallsalz (Natriumsalz) in Form eines elektrolythaltigen Pulvers.

Diese erfindungsgemäße Verbindung ($\lambda_{max}$ = 586 nm in wäßriger Lösung) besitzt ebenso sehr gute Farbstoffeigenschaften und färbt beispielsweise Cellulosefasermaterialien nach den in der Technik für faserreaktive Farbstoffe üblichen Applikations- und Fixiermethoden in rotstichig blauen Farbtönen mit guten Echtheiten.

Beispiel 194

Man verfährt zur Herstellung einer erfindungsgemäßen Verbindung gemäß den Angaben des Beispieles 193, setzt jedoch anstelle des dort verwendeten Diazoniumsalzes die Diazoniumverbindung von 2-Aminophenol-4-sulfonsäure in äquivalenter Menge ein. Man erhält das Alkalimetallsalz einer erfindungsgemäßen Verbindung entsprechend einer allgemeinen Formel (1e)

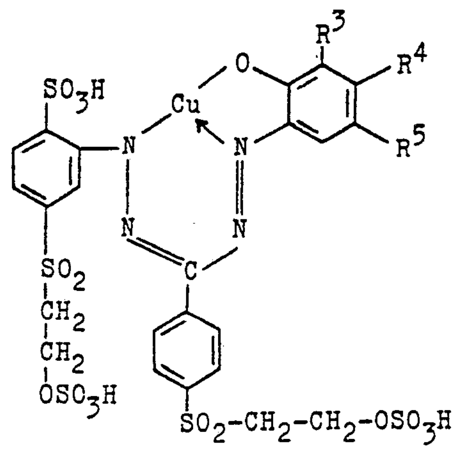

(1e)

in welcher $R^3$ und $R^4$ beide für ein Wasserstoffatom stehen und $R^5$ eine Sulfogruppe bedeutet. Sie löst sich in Wasser mit rotstichig blauer Farbe ($\lambda_{max}$ = 584 nm) und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 195

Man verfährt zur Herstellung einer erfindungsgemäßen Verbindung gemäß den Angaben des Beispieles 193, setzt jedoch anstelle des dort verwendeten Diazoniumsalzes die Diazoniumverbindung von 2-Aminophenol-4,6-disulfonsäure in äquivalenter Menge ein. Man erhält das Alkalimetallsalz einer erfindungsgemäßen Verbindung entsprechend der im Beispiel 194 angegebenen allgemeinen Formel (1e), in welcher $R^4$ ein Wasserstoffatom ist und $R^3$ und $R^5$ beide für eine Sulfogruppe stehen. Sie zeigt in Wasser ein $\lambda_{max}$ von 593 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 196

Man verfährt zur Herstellung einer erfindungsgemäßen Verbindung gemäß den Angaben des Beispieles 193, setzt jedoch anstelle des dort verwendeten Diazoniumsalzes die Diazoniumverbindung von 6-Acetylamino-2-aminophenol-4-sulfonsäure in äquivalenter Menge ein. Man erhält das Alkalimetallsalz einer erfindungsgemäßen Verbindung entsprechend der im Beispiel 194 angegebenen allgemeinen Formel (1e), in welcher $R^3$ für die Acetylaminogruppe, $R^4$ für ein Wasserstoffatom und $R^5$ für eine Sulfogruppe stehen. Sie besitzt in Wasser ein $\lambda_{max}$ von 592 nm und eignet sich seht gut als faserreaktiver Farbstoff. Nach den in der Technik üblichen Applikationsverfahren farbstarke rotstichig blaue Färbungen und Drucke mit guten Echtheitseigenschaften.

Beispiel 197

Man verfährt zur Herstellung einer erfindungsgemäßen Verbindung gemäß den Angaben des Beispieles 193, setzt jedoch anstelle des dort verwendeten Diazoniumsalzes die Diazoniumverbindung von 2-Aminophenol-5-sulfonsäure in äquivalenter Menge ein. Man erhält das Alkalimetallsalz einer erfindungsgemäßen Verbindung entsprechend der im Beispiel 194 angegebenen allgemeinen Formel (1e), in welcher $R^3$ und $R^5$ beide für ein Wasserstoffatom bedeuten und $R^4$ für eine Sulfogruppe steht. Sie besitzt in Wasser ein $\lambda_{max}$ von 593 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Beispiel 198

Man verfährt zur Herstellung einer erfindungsgemäßen Verbindung gemäß den Angaben des Beispieles 193, setzt jedoch anstelle des dort verwendeten Diazoniumsalzes die Diazoniumverbindung von 4-(2-Sulfatoethylsulfonyl)-2-aminophenol-6-sulfonsäure in äquivalenter Menge ein. Man erhält das Alkalimetallsalz einer erfindungsgemäßen Verbindung entsprechend der im Beispiel 194 angegebenen allgemeinen Formel (1e), in welcher $R^3$ eine Sulfogruppe bedeutet, $R^4$ ein Wasserstoffatom ist und $R^5$ für eine β-Sulfatoethylsulfonyl-Gruppe steht. Sie zeigt in Wasser ein $\lambda_{max}$ von 590 nm und eignet sich sehr gut als faserreaktiver Farbstoff. Nach den in der Technik üblichen Applikationsverfahren liefert sie beispielsweise auf Cellulosefasermaterialien farbstarke rotstichig blaue Färbungen und Drucke mit guten Echtheitseigenschaften.

Anwendungsbeispiel 1

Zur Färbung eines Baumwollgewebes wird ein wäßriges Färbebad hergestellt, das in 2 000 Volumenteilen 5 Teile der erfindungsgemäßen Verbindung von Beispiel 1, 10 Teile wasserfreies Natriumsulfat, 10 Teile Wasserfreies Natriumcarbonat und 4 Volumenteile einer 32,5 %igen wäßrigen Natronlauge gelöst enthält. In dieses Färbebad werden 100 Teile eines Baumwollgewebes gegeben, das bei einer Temperatur von 50 °C zwischen 60 und 90 Minuten gefärbt wird. Nach Seifen und Spülen in üblicher Weise erhält man eine farbstarke, blaue Färbung mit den in der Beschreibung angegebenen guten Gebrauchs- und Fabrikationsechtheiten.

Anwendungsbeispiel 2

Zum Bedrucken eines mercerisierten Baumwollgewebes wird eines Druckpaste verwendet, die auf 1 000 Teile 30 Teile der erfindungsgemäßen Verbindung von Beispiel 1, 50 Teile Harnstoff, 375 Teile

Wasser, 500 Teile einer neutralen 4 %igen wäßrigen Alginatverdickung, 15 Teile Natriumbicarbonat und 10 Teile des Natriumsalzes der m-Nitrobenzoesäure enthält. Das Baumwollgewebe wird in üblicher Weise mit dieser Druckpaste bedruckt und nach dem Trocknen 10 bis 15 Minuten lang mit Wasserdampf von 101 bis 103 °C gedämpft. Nach diesem Fixierungsvorgang wird das Gewebe in üblicher Weise durch Spülen mit kaltem und warmen Wasser, durch Seifen bei Kochtemperatur und erneutem Spülen mit Wasser und anschließenden Trocknen fertiggestellt. Man erhält einen farbstarken blauen Druck, der die in der Beschreibung genannten gute Licht- und Naßechtheiten besitzt.

Anwendungsbeispiel 3

Es werden 30 Teile der erfindungsgemäßen Verbindung von Beispiel 4 in 200 Teilen Wasser von 70 °C gelöst; die Lösung wird in 500 Teile einer neutralen oder schwach sauren, wäßrigen 4 %igen Alginatverdickung eingerührt und mit Wasser auf 1 000 Teile aufgefüllt. Mit der so hergestellten Druckpaste wird in üblicher Weise ein Gewebe aus mercerisierter Baumwolle bedruckt, das anschließend getrocknet und zur Fixierung der erfindungsgemäßen Verbindung durch ein 90 bis 105 °C heißes wäßriges Fixierbad geführt wird, das aus 1 000 Teilen Wasser, 1 000 Teilen Natriumchlorid, 1 500 Teilen wasserfreim Natriumcarbonat, 500 Teilen wasserfreiem Kaliumcarbonat und 700 Volumenteilen einer 33 %igen wäßrigen Natronlauge zusammengesetzt ist. Die Fixierung erfolgt hierbei bereits in wenigen Sekunden, so daß die Durchführung des bedruckten Gewebes sehr schnell ausgeführt werden kann. Nach dieser Fixierungsbehandlung wird das Gewebe in üblicher Weise durch Spülen mit kaltem Wasser, durch heißes Waschen, erneutes Spülen mit Wasser und Trocknen fertiggestellt. Man erhält ein egales, blaues Druckmuster mit den in der Beschreibung genannten guten Licht- und Naßechtheiten.

Anwendungsbeispiel 4

Es werden 40 Teile der erfindungsgemäßen Verbindung von Beispiel 1 in 200 Teilen Wasser von 70 °C gelöst; die Lösung wird in 500 Teile einer neutralen oder schwach sauren, wäßrigen 4 %igen Alginatverdickung eingerührt und mit Wasser auf 1 000 Teile aufgefüllt. Mit der so hergestellten Druckpaste wird in üblicher Weise ein Gewebe aus mercerisierter Baumwolle bedruckt, das anschließend getrocknet und zur Fixierung der erfindungsgemäßen Verbindung mit einer Klotzflotte aus 100 Teilen Soda, 100 Teilen Kochsalz, 100 Teilen Pottasche, 100 Volumenteilen 33 %ige wäßrige Natronlauge und 600 Teilen Wasser bei Raumtemperatur mit einer Flottenaufnahme von ca. 60 bis 70 % des Gewichtes des Baumwollgewebes foulardiert wird. Bereits nach 5 bis 10 Minuten Verweilzeit an der Luft ist die Fixierung erfolgt. Nach dieser Fixierbehandlung wird das Gewebe in üblicher Weise durch Spülen mit kaltem Wasser, durch heißes Waschen, erneutem Spülen mit Wasser und Trocknen fertiggestellt. Man erhält ein egales, blaues Druckmuster mit guten Licht- und Naßechtheiten.

Anwendungsbeispiel 5

Zur Färbung eines Baumwollgewebes wird eine wäßrige Klotzflotte hergestellt, die im Liter 40 g der erfindungsgemäßen Verbindung von Beispiel 1, 100 g Harnstoff, 30 g wasserfreies Natriumsulfat und 16 Volumenteile einer wäßrigen 32,5 %igen Natronlauge enthält. Das Baumwollgewebe wird bei Raumtemperatur mit einer Flottenaugnahme von 80 % des Gewichtes des Baumwollgewebes foulardiert, auf eine Docke aufgewickelt, in eine Plastikfolie gehüllt und 24 Stunden lang bei Raumtemperatur liegen lassen. Während dieser Zeit fixiert der Farbstoff. Nach dem Seifen und Spülen in üblicher Weise erhält man eine farbstarke brillante blaue Färbung des Baumwollgewebes, die die im Beispiel 1 genannten guten Gebrauchs- und Fabrikationsechtheiten aufweist.

Anwendungsbeispiel 6

Verfährt man in einer der oben beschriebenen Verfahrensweisen gemäß der vorliegenden Erfindung zum Färben und Bedrucken von Wolle oder von synthetischen Polyamidmaterialien oder von Cellulosefasermaterialien, beispeilweise analog den obigen Anwendungsbeispielen 1 bis 6, und setzt hierfür als Farbstoff erfindungsgemäß eine der in den anderen vorstehenden Ausführungs- oder Tabellenbeispielen beschriebenen erfindungsgemäßen Kupferformazanverbindungen ein, so erhält man ebenfalls kräftige Färbungen und Drucke mit guten Echtheiten und den für diese Farbstoffe angegebenen Farbtönen.

**Patentansprüche**

1. Eine Verbindung entsprechend der allgemeinen Formel (1)

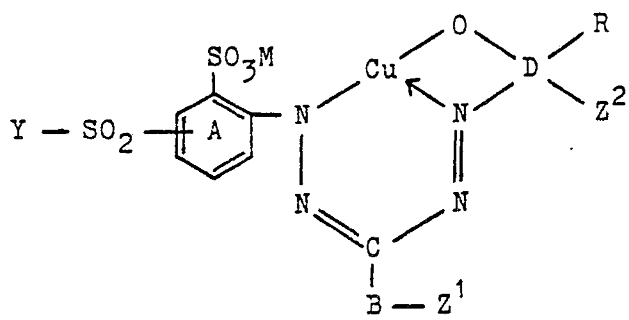

(1)

in welcher bedeuten : Y ist die Vinylgruppe oder eine Gruppe der Formel (2)

$$-CH_2-CH_2-E \quad (2)$$

in welcher.

E einen alkalisch eliminierbaren Substituenten darstellt ;

der Benzolkern A kann durch weitere Substituenten substituiert sein ;

die Gruppe $Y-SO_2-$ ist an den Benzolkern in meta-Stellung zur angegebenen Gruppe $-SO_3M$ und para-Stellung zum Stickstoffatom oder in para-Stellung zur angegebenen Gruppe $-SO_3M$ und meta-Stellung zum Stickstoffatom gebunden ;

M ist ein Wasserstoffatom oder das Äquivalent eines Metalls ;

B ist ein Phenylen- oder ein Naphthylenrest, die beide durch 1 oder 2 Substituenten substituiert sein können, die aus der Gruppe der Substituenten Hydroxy, Nitro, Halogen, Alkyl von 1 bis 5 C-Atomen, Alkoxy von 1 bis 4 C-Atomen, Carbalkoxy mit 1 bis 4 C-Atomen im Alkylrest, eine Gruppe der nachstehend definierten Formel $-SO_2-Y^1$, Alkylsulfonyl von 1 bis 4 C-Atomen, Amino, Acylamino mit dem Acylrest einer aliphatischen Carbonsaüre oder Sulfonsäure mit 1 bis 4 bzw. 2 bis 4 C-Atomen im Alkyl- bzw. Alkenylrest oder der gegebenenfalls durch Sulfo, Carboxy, Chlor und Methyl substituierten Benzoe- oder Benzolsulfonsäure, Sulfamoyl, N-Monoalkylamino von 1 bis 4 C-Atomen und N, N-Dialkylamino mit jeweils 1 bis 4 C-Atomen in den Alkylresten ausgewählt sind, oder

B ist der Rest eines gegebenenfalls durch Alkyl von 1 bis 4 C-Atomen, Alkoxy von 1 bis 4 C-Atomen, Chlor, Benzyl, Phenethyl und/oder Phenyl substituierten Furans, Thiophens, Pyrrols, Imidazols, Pyrazols, Pyridins, Pyrimidins, Chinolins oder Benzimidazols, oder

B ist der bivalente Rest eines Alkans von 1 bis 8 C-Atomen oder eines Alkens von 2 bis 8 C-Atomen, wobei diese Alkan- und Alkenreste noch durch einen Phenylrest substituiert sein können, der wiederum durch Substituenten aus der Gruppe Methyl, Ethyl, Methoxy, Ethoxy, Fluor, Chlor, Brom und Sulfamoyl substituiert sein kann, oder

$-B-Z^1$ stellen zusammen ein Wasserstoffatom dar ;

D ist ein Benzol- oder ein Naphthalinring, an denen das Sauerstoffatom und das Stickstoffatom zueinander ortho-ständig gebunden sind und die durch 1 oder 2, bevorzugt 1, Substituenten substituiert sein können die aus der Gruppe Halogen, Nitro, Hydroxy, Alkyl von 1 bis 5 C-Atomen, Alkylaminoalkyl mit Alkylresten von jeweils 1 bis 5 C-Atomen, Alkoxy von 1 bis 4 C-Atomen, Alkylsulfonyl von 1 bis 4 C-Atomen, Phenylsulfonyl, Sulfamoyl, N-Monoalkylsulfamoyl mit 1 bis 4 C-Atomen, N,N-Dialkylsulfamoyl mit jeweils 1 bis 4 C-Atomen in den Alkylresten, Alkanoylamino von 2 bis 5 C-Atomen, Benzoylamino, N-Monoalkylamino von 1 bis 4 C-Atomen, N,N-Dialkylamino mit jeweils 1 bis 4 C-Atomen in den Alkylresten, Phenyl und durch Sulfo, Carboxy, Chlor, Methyl und/oder Methoxy substituiertes Phenyl ausgewählt sind ;

R ist ein Wasserstoffatom oder eine Gruppe der nachstehend definierten Gruppe der Formel (2a)

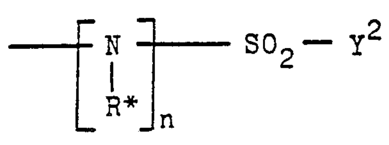

(2a)

$Z^1$ ist ein Wasserstoffatom oder eine wasserlöslichmachende Gruppe, die an aliphatische oder aromatische Kohlenstoffatome von B einmal oder zweimal gebunden ist ;

$Z^2$ ist ein Wasserstoffatom oder eine wasserlöslichmachende Gruppe, die an aliphatische Kohlenstoffatome von Substituenten an D oder an aromatische Kohlenstoffatome von D einmal oder zweimal gebunden ist ;

R* ist ein Wasserstoffatom oder eine Alkylgruppe von 1 bis 4 C-Atomen, die durch eine Hydroxy-, Sulfato-, Sulfo- oder Carboxygruppe substituiert sein kann ;

n ist die Zahl Null oder 1 ;

$Y^1$ ist die Vinylgruppe oder eine Gruppe der allgemeinen Formel (2b)

$$-CH_2-CH_2-E^1 \qquad (2b)$$

in welcher
$E^1$ eine Hydroxygruppe oder einen alkalisch eliminierbaren Substituenten bedeutet ;
$Y^2$ ist die Vinylgruppe oder eine Gruppe der allgemeinen Formel (2c)

$$-CH_2-CH_2-E^2 \qquad (2c)$$

in welcher $E^2$ eine Hydroxygruppe oder einen alkalisch eliminierbaren Substituenten bedeutet.

2. Verbindung nach Anspruch 1, dadurch gekennzeichnet, daß der Benzolkern A keine weiteren Substituenten enthält.

3. Verbindung nach Anspruch 1, dadurch gekennzeichnet, daß eine weiterer Substituent im Benzolkern A ein Alkyl von 1 bis 4 C-Atomen, Alkoxy von 1 bis 4 C-Atomen, Halogen, Carboxy oder Sulfo ist.

4. Verbindung nach einem der Ansprüche 1 bis 3, dadurch gekennzeichnet, daß B ein Phenylen- oder ein Naphthylenrest ist, die beide keine weiteren Substituenten enthalten.

5. Verbindung nach einem der Ansprüche 1 bis 3, dadurch gekennzeichnet, daß B ein Naphthylenrest oder vorzugsweise ein Phenylenrest ist, die durch weitere Substituenten unsubstituiert oder durch 1 oder 2 weitere Substituenten aus der Gruppe Chlor, Methyl, Methoxy, Ethoxy, Nitro, Hydroxy, Methylsulfonyl, Ethylsulfonyl, β-Hydroxyethylsulfonyl, β-Sulfatoethylsulfonyl, Carbethoxy und Carbomethoxy substituiert sind.

6. Verbindung nach einem der Ansprüche 1 bis 5, dadurch gekennzeichnet, daß D ein Benzolkern ist, der durch weitere Substituenten nicht substituiert oder durch 1 oder 2 weitere Substituenten aus der Gruppe Chlor, Nitro, Hydroxy, Acetylamino, Methyl, Methylaminomethyl, Methoxy, Methylsulfonyl und Ethylsulfonyl substituiert ist.

7. Verbindung nach einem der Ansprüche 1 bis 6, dadurch gekennzeichnet, daß R eine in Anspruch 1 definierte Gruppe (2a) ist.

8. Verbindung nach einem der Ansprüche 1 bis 7, dadurch gekennzeichnet, daß $Z^1$ einmal oder zweimal an ein bzw. zwei aromatische Kohlenstoffatome von B gebunden ist und eine bzw. zwei Sulfogruppen bedeutet.

9. Verbindung nach einem der Ansprüche 1 bis 7, dadurch gekennzeichnet, daß $Z^2$ einmal oder zweimal an ein bzw. zwei aromatische Kohlenstoffatome von D gebunden ist und eine bzw. zwei Sulfogruppen bedeutet.

10. Verbindung nach einem der Ansprüche 1 bis 9, dadurch gekennzeichnet, daß R ein Rest der Formel (2a) ist und n für die Zahl Null steht.

11. Verbindung nach einem der Ansprüche 1, 2, 3, 6, 7 oder 9, dadurch gekennzeichnet, daß B ein Phenylenrest ist, der durch keinen weiteren Substituenten substituiert ist oder durch 1 oder 2 weitere Substituenten aus der Gruppe Chlor, Methyl, Methoxy, Ethoxy, Nitro, Hydroxy, Methylsulfonyl, Ethylsulfonyl, β-Hydroxyethylsulfonyl, β-Sulfatoethylsulfonyl, Carbethoxy und Carbomethoxy substituiert ist und $Z^1$ für ein Wasserstoffatom oder eine oder zwei Sulfogruppen oder eine Sulfo- und eine Carboxygruppe steht.

12. Verbindung nach einem der Anspruch 1, 2, 3, 4, 5, 6, oder 8, dadurch gekennzeichnet, daß D ein Benzolkern ist, der durch 1 oder 2 Substituenten aus der Gruppe Chlor, Nitro, Hydroxy, Acetylamino, Methyl, Methylaminomethyl, Methoxy, Methylsulfonyl und Ethylsulfonyl als weitere Substituenten substituiert ist, R ein Wasserstoffatom oder eine β-Hydroxyethylsulfonyl- oder β-Sulfatoethylsulfonyl-Gruppe bedeutet und $Z^2$ ein Wasserstoffatom oder eine oder zwei Sulfogruppen darstellt.

13. Verbindung nach Anspruch 1 entsprechend einer allgemeinen Formel (3)

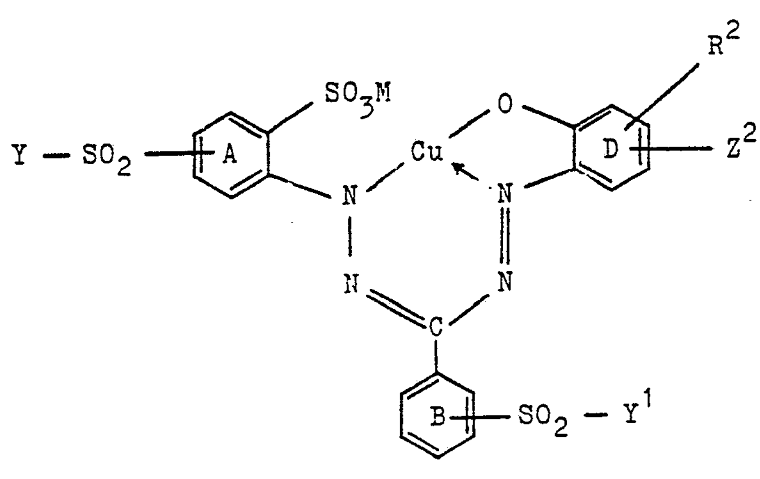

in welcher M, Y und $Y^1$ die in Anspruch 1 genannten Bedeutungen haben, $R^2$ eine Gruppe der Formel $-SO_2-Y^2$ mit $Y^2$ der in Anspruch 1 genannten Bedeutung darstellt oder eine Alkylsulfonylgruppe von 1 bis 4 C-Atomen ist, $Z^2$ ein Wasserstoffatom oder eine Sulfogruppe bedeutet, die ortho-ständig zum Sauerstoffatom an den Benzolkern D gebunden ist und die Benzolkerne A, B und D keine weiteren Substituenten enthalten.

14. Verbindung nach Anspruch 1 entsprechend der in Anspruch 13 angegebenen allgemeinen Formel (3), in welcher M, Y und $Y^1$ die in Anspruch 1 genannten Bedeutungen haben, $Z^2$ in para-Stellung zur Oxigruppe steht und eine Sulfogruppe ist, $R^2$ meta-ständig zu $Z^2$ steht und ein Wasserstoffatom oder eine Acetylamino-Methyl-, Nitro- oder Sulfogruppe oder ein Chloratom bedeutet und lie Benzolkerne A, B und D keine weiteren Substituenten enthalten.

15. Verbindung nach Anspruch 13 oder 14, dadurch gekennzeichnet, daß die Gruppe $-SO_2-Y^1$ in para-Stellung gebunden ist.

16. Verbindung nach Anspruch 1 entsprechend einer allgemeinen Formel (4)

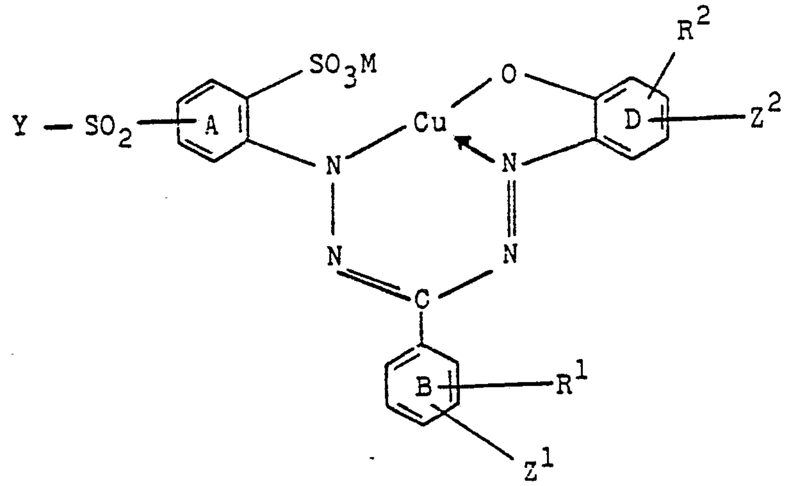

(4)

in welcher M und Y die Anspruch 1 genannten Bedeutungen haben, $R^1$ in meta- oder para-Stellung zum C-Atom des heterocyclischen Cu-Komplex-Ringes an B gebunden ist und ein Wasserstoffatom oder eine Methyl- oder Methoxygruppe oder ein Chloratom bedeutet, $Z^1$ in meta- oder para-Stellung zum C-Atom des heterocyclischen Cu-Komplex-Ringes an B gebunden ist und ein Wasserstoffatom oder eine Sulfogruppe bedeutet, $R^2$ ein Wasserstoffatom ist und $Z^2$ para-ständig zum Stickstoffatom an D gebunden ist und eine Sulfogruppe bedeutet.

17. Verbindung nach Anspruch 1 entsprechend der in Anspruch 16 angegebenen allgemeinen Formel (4), dadurch gekennzeichnet, daß M und Y die un Anspruch 1 und $R^1$ und $Z^1$ die in Anspruch 16 genannten Bedeutungen haben, $Z^2$ eine in para-Stellung zum Sauerstoffatom an D gebundene Sulfogruppe ist und $R^2$ für ein Wasserstoffatom oder, ortho-ständig zum Sauerstoffatom an D gebunden, ein Chloratom, eine Acetylaminogruppe, Methyl-, Nitro- oder Sulfogruppe darstellt.

18. Verbindung nach Anspruch 1 entsprechend einer in Anspruch 16 angegebenen allgemeinen Formel (4), dadurch gekennzeichnet, daß M und Y die in Anspruch 1 und $R^1$ und $Z^1$ die in Anspruch 16 angegebenen Bedeutungen haben und $Z^2$ eine in ortho-Stellung zum Sauerstoffatom an D gebundene Sulfogruppe ist und $R^2$ an D meta-ständig zu $Z^2$ gebunden ist und eine Alkylsulfonylgruppe von 1 bis 4 C-Atomen, ein Chloratom, eine Acetylaminogruppe oder eine Methylgruppe bedeutet.

19. Verbindung nach Anspruch 1 entsprechend einer allgemeinen Formel (5)

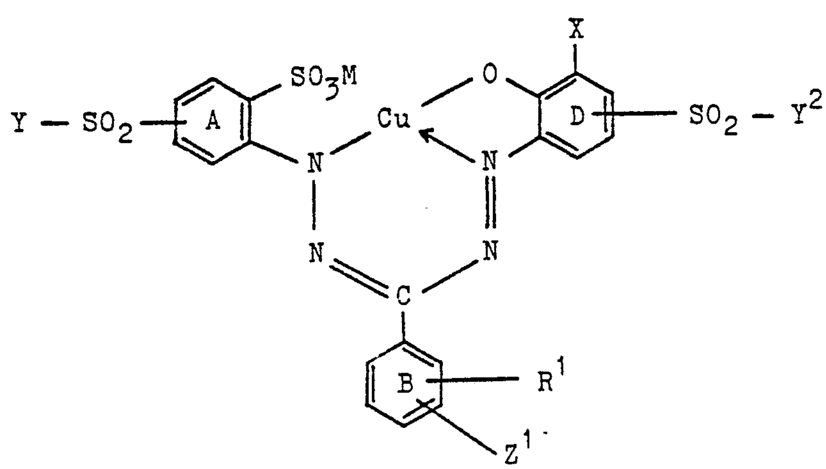

(5)

in welcher M, Y und $Y^2$ die in Anspruch 1 genannten Bedeutungen haben, $R^1$ ein Wasserstoffatom oder eine in meta- oder para-Stellung zum C-Atom des heterocyclischen Cu-Komplex-Ringes an B gebundene Methyl- oder Methoxygruppe oder Chloratom ist, $Z^1$ für ein Wasserstoffatom steht oder eine Sulfogruppe bedeutet, die in meta- oder para-Stellung zum C-Atom des heterocyclischen Cu-Komplex-Ringes an B gebunden ist, und X entweder ein Wasserstoffatom ist und in diesem Falle die an D gebundene β-Sulfatoethylsulfonyl-Gruppe ortho- oder meta-ständig zu X steht, oder X eine Sulfogruppe bedeutet, zu der die an D gebundene β-Sulfato-ethylsulfonyl-Gruppe meta-ständig steht.

20. Verbindung nach Anspruch 16, 17, 18 oder 19, dadurch gekennzeichnet , daß $R^1$ oder $Z^1$ an B in ortho-Stellung zu dem C-Atom des Cu-Heterocyclus stehen.

21. Verbindung nach einem der Ansprüche 1 bis 20, dadurch gekennzeichnet, daß Y, $Y^1$ und $Y^2$, zueinander gleich oder voneinander verschieden, jedes eine Vinylgruppe ist oder eine Ethylgruppe bedeutet, die in β-Stellung durch ein Chlor- oder Bromatom, eine niedere Alkanoyloxy-Gruppe, eine Aroyloxygruppe, eine Arylsulfonyloxygruppe, eine niedere Dialkylaminogruppe, eine Phosphatogruppe, eine Thiosulfatogruppe oder eine Sulfatogruppe substituiert ist, wobei $Y^1$ und/oder $Y^2$ auch die Bedeutung einer β-Hydroxyethyl-Gruppe haben können.

22. Verbindung nach einem der Ansprüche 1 bis 20, dadurch gekennzeichnet, daß Y eine β-Sulfatoethyl-Gruppe bedeutet, $Y^1$ eine β-Hydroxyethyl- oder β-Sulfatoethyl-Gruppe ist und $Y^2$ eine β-Hydroxyethyl- oder β-Sulfatoethyl-Gruppe bedeutet, wobei Y, $Y^1$ und $Y^2$ zueinander gleiche oder voneinander verschiedene Bedeutungen besitzen können.

23. Verbindung nach einem der Ansprüche 1 bis 20, dadurch gekennzeichnet, daß die Gruppe $—SO_2—Y$ im Benzolkern A in meta-Stellung zum N-Atom und gleichzeitig in para-Stellung zur Gruppe $—SO_3M$ steht.

24. Verbindung nach einem der Ansprüche 1 bis 23, dadurch gekennzeichnet, daß M für ein Wasserstoffatom oder ein Alkalimetall steht.

25. Verfarhen zur Herstellung der in Anspruch 1 genannten und definierten Verbindungen der allgemeinen Formel (1), dadurch gekennzeichnet, daß man eine aromatische Hydrazonverbindung der allgemeinen Formel (6).

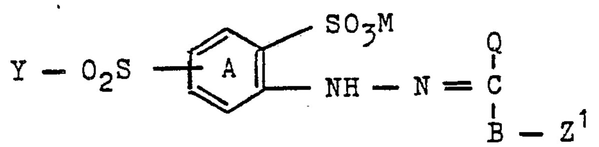

(6)

in welcher A, B, M, Y und $Z^1$ die obengenannten Bedeutungen haben und Q ein Wasserstoffatom oder einen durch Azokupplung ersetzbaren Substituenten, beispielsweise die Formylgruppe oder Carboxygruppe oder eine gegebenenfalls abgewandelte, zur Carboxygruppe verseifbare Gruppe, wie die Cyan-, eine Carbalkoxy- oder Carbonsäureamidgruppe, bedeutet, mit der Diazoniumverbindung eines aromatischen Amins der allgemeinen Formel (7).

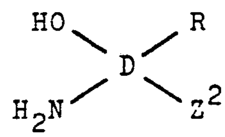

(7)

in welcher D, R und $Z^2$ die obengenannten Bedeutungen haben, und mit einem kupferabgebenten Mittel unsetzt, wobei man die Komponenten so auswählt, daß $Z^1$ und $Z^2$ die obengenannten Bedingungen erfüllen.

26. Verwendung einer Verbindung von Anspruch 1 oder einer nach Anspruch 25 hergestellten Verbindung der allgemeinen Formel (1) als Farbstoffe, vorzugsweise zum Färben oder Bedrucken von hydroxy- und/oder carbonamidgruppenhaltigen Materialien, insbesondere Fasermaterialien.

**Claims**

1. A compound of the formula (1)

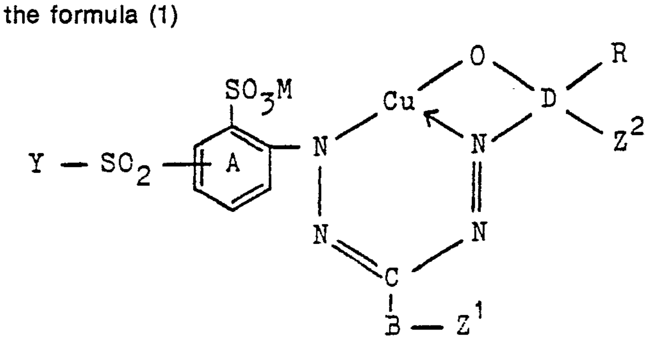

(1)

in which : Y is a vinyl group or a group of the formula (2)

$$-CH_2-CH_2-E \quad (2)$$

in which

E represents a substituent eliminable under alkaline conditions ;

the benzene nucleus A can be substituted by further substituents ;

the $Y-SO_2-$ group is bonded to the benzene nucleus in meta-position relative to the indicated $-SO_3M$ group and in para-position relative to the nitrogen atom or in para-position relative to the indicated $-SO_3M$ group and in meta-position relative to the nitrogen atom ;

M is a hydrogen atom or one equivalent of a metal ;

B is a phenylene radical or a naphthylene radical which can both be substituted by 1 or 2 substituents which are selected from the group of the susbstituents hydroxy, nitro, halogen, alkyl of 1 to 5 carbon atoms, alkoxy of 1 to 4 carbon atoms, carbalkoxy with 1 to 4 carbon atoms in the alkyl radical, a group of the formula $-SO_2-Y^1$ defined hereinafter, alkylsulfonyl of 1 to 4 carbon atoms, amino, acylamino with the acyl radical of an aliphatic carboxylic acid or sulfonic acid of 1 to 4 or 2 to 4 carbon atoms in the alkyl or alkenyl radical respectively or of unsubstituted or sulfo-, carboxy-, chlorine- or methyl-substituted benzoic or benzene sulfonic acid, sulfamoyl, N-monoalkylamino of 1 to 4 carbon atoms and N,N-dialkylamino of 1 to 4 carbon atoms in each of the alkyl radicals, or

B is the radical of unsubstituted or $C_1$-$C_4$-alkyl-, $C_1$-$C_4$-alkoxy-, chlorine-, benzyl-, phenethyl- and/or phenyl-substituted furan, thiophene, pyrrole, imidazole, pyrazole, pyridine, pyrimidine, quinoline or benzimidazole, or

B is the bivalent radical of an alkane of 1 to 8 carbon atoms or of an alkene of 2 to 8 carbon atoms, it being possible for these alkane and alkene radicals to be additionally substituted by a phenyl radical which in turn can be substituted be substituents from the group consisting of methyl, ethyl, methoxy, ethoxy, fluorine, chlorine, bromine and sulfamoyl, or

$-B-Z^1$ together represent a hydrogen atom ;

D is a benzene or a naphthalene ring to each of which the oxygen atom and the nitrogen atom are bonded in ortho-position relative to each other and which can be substituted by 1 or 2, preferably 1, substituents, which are selected from the group consisting of halogen, nitro, hydroxy, alkyl of 1 to 5 carbon atoms, alkylaminoalkyl having alkyl radicals of 1 to 5 carbon atoms each, alkoxy of 1 to 4 carbon atoms, alkysulfonyl of 1 to 4 carbon atoms, phenylsulfonyl, sulfamoyl, N-monoalkylsulfamoyl of 1 to 4 carbon atoms, N-dialkylsulfamoyl having 1 to 4 carbon atoms in each of the alkyl radicals, alkanoylamino of 2 to 5 cabon atoms, benzoylamino, N-monoalkylamino of 1 to 4 carbon atoms, N,N-dialkylamino of 1 to 4 carbon atoms in each of the alkyl radicals, phenyl and sulfo-, carboxy-, chlorine-, methyl- and/or methoxy-substituted phenyl ;

R is a hydrogen atom or a group, defined below, of the formula (2a)

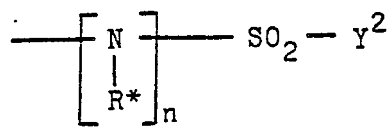

(2a)

$Z^1$ is a hydrogen atom or a water-solubilizing group which is bonded once or twice to aliphatic or aromatic carbon atoms of B ;

$Z^2$ is a hydrogen atom or a water-solubilizing group which is bonded once or twice to aliphatic carbon atoms of substituents on D or to aromatic carbon atoms of D ;

R* is a hydrogen atom or an alkyl group of 1 to 4 carbon atoms which can be substituted by a hydroxy, sulfato, sulfo or carboxy group ;

n is the number zero or 1 ;

$Y^1$ is a vinyl group or a group of the formula (2b)

$$-CH_2-CH_2-E^1 \quad (2b)$$

in which

$E^1$ denotes a hydroxy group or a substituent eliminable under alkaline conditions ;

$Y^2$ is a vinyl group or a group of the formula (2c)

$$-CH_2-CH_2-E^2 \quad (2c)$$

in which $E^2$ denotes a hydroxy group or a substituent eliminable under alkaline conditions.

2. The compound as claimed in claim 1, wherein the benzene nucleus A contains no further substituents.

3. The compound as claimed in claim 1, wherein a further substituent in the benzene nucleus A is an alkyl of 1 to 4 carbon atoms, alkoxy of 1 to 4 carbon atoms, halogen, carboxy or sulfo.

4. The compound as claimed in any one of claims 1 to 3, wherein B is a phenylene radical or a naphthylene radical which both contain no further substituents.

5. The compound as claimed in any one of claims 1 to 3, wherein B is a naphthylene radical or preferably a phenylene radical which are unsubstituted by further substituents or substituted by 1 or 2 further substituents from the group consisting of chlorine, methyl, methoxy, ethoxy, nitro, hydroxy, methylsulfonyl, ethylsulfonyl, β-hydroxyethylsulfonyl, β-sulfatoethylsulfonyl, carbethoxy and carbomethoxy.

6. The compound as claimed in any one of claims 1 to 5, wherein D is a benzene nucleus which is not substituted by further substituents or substituted by 1 or 2 further substituents from the group consisting of chlorine, nitro, hydroxy, acetylamino, methyl, methylaminomethyl, methoxy, methylsulfonyl and ethylsulfonyl.

7. The compound as claimed in any one of claims 1 to 6, wherein R is a group (2a) defined in claim 1.

8. The compound as claimed in any one of claims 1 to 7, wherein $Z^1$ is bonded once or twice to one or two aromatic carbon atoms of B and denotes one or two sulfo groups.

9. The compound as claimed in any one of claims 1 to 7, wherein $Z^2$ is bonded once or twice to one or two aromatic carbon atoms of D and denotes one or two sulfo groups.

10. The compound as claimed in any one of claims 1 to 9, wherein R is a radical of the formula (2a) and n stands for the number zero.

11. The compound as claimed in any one of claims 1, 2, 3, 6, 7 or 9, wherein B is a phenylene radical which is substituted by no further substituents or is substituted by 1 or 2 further substituents from the group consisting of chlorine, methyl, methoxy, ethoxy, nitro, hydroxy, methylsulfonyl, ethylsulfonyl, β-hydroxyethylsulfonyl, β-sulfatoethylsulfonyl, carbethoxy and carbomethoxy and $Z^1$ stands for a hydrogen atom or one or two sulfo groups or a sulfo and a carboxy group.

12. The compound as claimed in any one of claims 1, 2, 3, 4, 5, 6 or 8, wherein D is a benzene nucleus which is substituted by 1 or 2 substituents from the group consisting of chlorine, nitro, hydroxy, acetylamino, methyl, methylaminomethyl, methoxy, methylsulfonyl and ethylsulfonyl as further substituents, R denotes a hydrogen atom or a β-hydroxyethylsulfonyl or β-sulfatoethylsulfonyl group and $Z^2$ represents a hydrogen atom or one or two sulfo groups.

13. The compound as claimed in claim 1 of a formula (3)

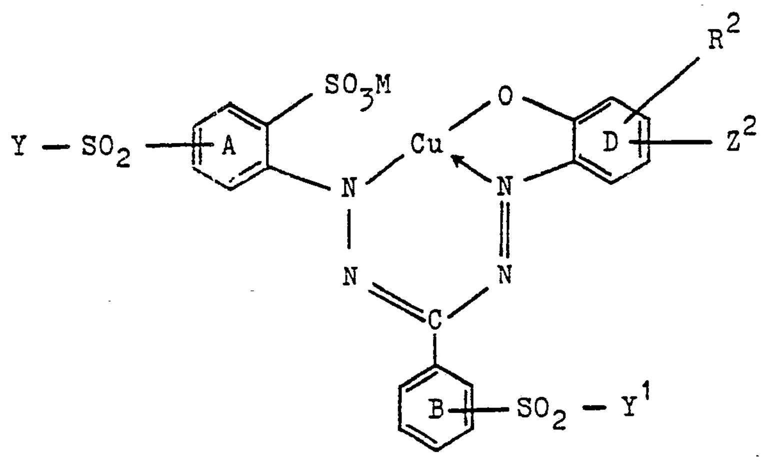

(3)

in which M, Y and $Y^1$ have the denotations mentioned in claim 1, $R^2$ represents a group of the formula $-SO_2-Y^2$ where $Y^2$ has the denotation mentioned in claim 1, or $R^2$ is an alkylsulfonyl group of 1 to 4 carbon atoms, $Z^2$ denotes a hydrogen atom or a sulfo group which is bonded to the benzene nucleus D in ortho-position relative to the oxygen atom, and the benzene nuclei A, B and D contain no further substituents.

14. The compound as claimed in claim 1 of the formula (3) indicated in claim 13 in which M, Y and $Y^1$ have the denotations mentioned in claim 1, $Z^2$ is in the para-position relative to the oxy group and is a sulfo group, $R^2$ is in meta-position relative to $Z^2$ and denotes a hydrogen atom or an acetylamino, methyl, nitro or sulfo group or a chlorine atom, and the benzene nuclei A, B and D contain no further substituents.

15. The compound as claimed in claim 13 or 14, wherein the $-SO_2Y^1$ group is bonded in para-position.

16. The compound as claimed in claim 1 of a formula (4)

(Siehe Formel Seite 46 f.)

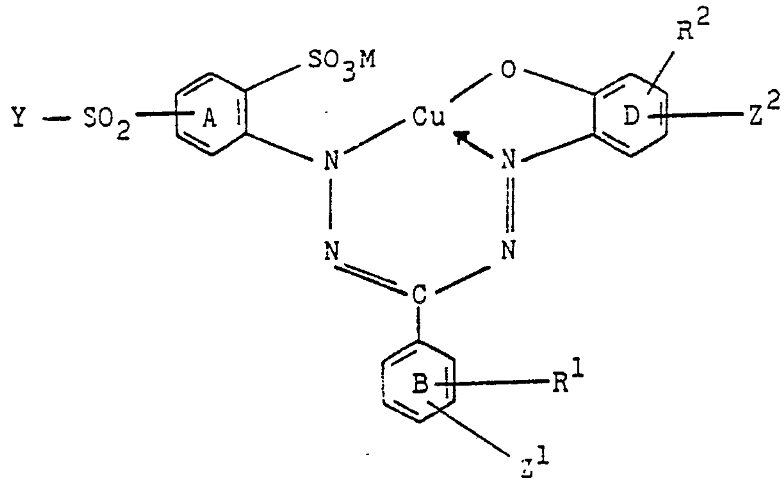

in which M and Y have the denotations mentioned in claim 1, $R^1$ bonded to B in meta- or para-position relative to the carbon atom of the heterocyclic copper complex ring and it denotes a hydrogen atom or a methyl or methoxy group or a chlorine atom, $Z^1$ is bonded to B in meta- or para-position relative to the carbon atom of the heterocyclic copper complex ring and denotes a hydrogen atom or a sulfo group, $R^2$ is a hydrogen atom and $Z^2$ is bonded to D in para-position relative to the nitrogen atom and denotes a sulfo group.

17. The compound as claimed in claim 1 of the formula (4) indicated in claim 16, wherein M and Y have the denotations mentioned in claim 1 and $R^1$ and $Z^1$ have the denotations mentioned in claim 16, $Z^2$ is a sulfo group bonded to D in para-position relative to the oxygen atom and $R^2$ stands for a hydrogen atom or, bonded to D in ortho-position relative to the oxygen atom, represents a chlorine atom, an acetylamino group or a methyl, nitro or sulfo group.

18. The compound as claimed in claim 1 of a formula (4) indicated in claim 16, wherein M and Y have the denotations indicated in claim 1 and $R^1$ and $Z^1$ have the denotations indicated in claim 16 and $Z^2$ is a sulfo group bonded to D in ortho-position relative to the oxygen atom and $R^2$ is bonded to D in meta-position relative to $Z^2$ and denotes an alkylsulfonyl group of 1 to 4 carbon atoms, a chlorine atom, an acetylamino group or a methyl group.

19. The compound as claimed in claim 1 of a formula (5)

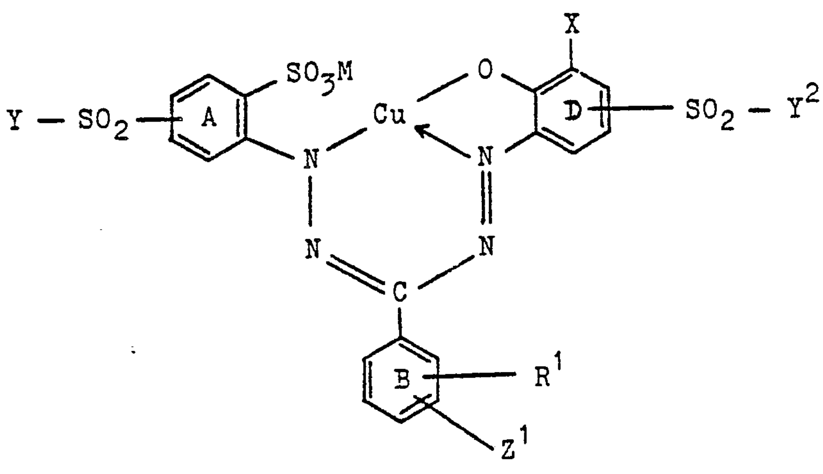

(5)

in which M, Y and $Y^2$ have the denotations mentioned in claim 1, $R^1$ is a hydrogen atom or a methyl or methoxy group or chlorine atom bonded to B in meta- or para-position relative to the carbon atom of the heterocyclic copper complex ring, $Z^1$ stands for a hydrogen atom or denotes a sulfo group which is bonded to B in meta- or para-position relative to the carbon atom of the heterocyclic copper complex ring, and X either is a hydrogen atom, in which case the β-sulfatoethylsulfonyl group bonded to D is in ortho- or meta-position relative to X, or denotes a sulfo group relative to which the β-sulfatoethylsulfonyl group bonded to D in in meta-position.

20. The compound as claimed in claim 16, 17, 18 or 19 wherein $R^1$ or $Z^1$ on B are in ortho-position relative to the carbon atom of the copper heterocycle.

21. The compound as claimed in any one of claims 1 to 20 wherein Y, $Y^1$ and $Y^2$, indentical to or different from one another, each is a vinyl group or denotes an ethyl group which is substituted in β-position by a chlorine or bromine atom, by a lower alkanoyloxy group, by an aroyloxy group, by an

arylsulfonyloxy group, by a lower dialkylamino group, by a phosphato group, by a thiosulfato group or by a sulfato group, and $Y^1$ and/or $Y^2$ can also denote a β-hydroxyethyl group.

22. The compound as claimed in any one of claims 1 to 20, wherein Y denotes a β-sulfatoethyl group, $Y^1$ is a β-hydroxyethyl or β-sulfatoethyl group and $Y^2$ denotes a β-hydroxyethyl or β-sulfatoethyl group, and Y, $Y^1$ and $Y^2$ can possess denotations which are identical or different from one another.

23. The compound as claimed in any one of claims 1 to 20, wherein the $—SO_2—Y$ group in the benzene nucleus A is in meta-position relative to the nitrogen atom and at the same time in para-position relative to the $—SO_3M$ group.

24. The compound as claimed in any one of claims 1 to 23, wherein M stands for a hydrogen atom or an alkali metal.

25. A process for preparing the compound of the formula (1) mentioned and defined in claim 1, which comprises reacting an aromatic hydrazone compound of the formula (6)

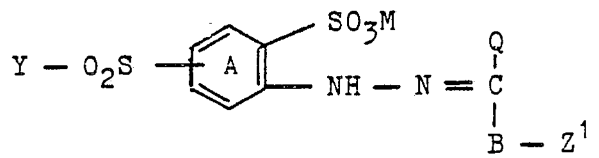

(6)

in which A, B, M, Y and $Z^1$ have the abovementioned denotations and Q denotes a hydrogen atom or a substituent replaceable by azo coupling, for example a formyl group or a carboxy group or an optionally modified group which can be hydrolysed to a carboxy group, such as a cyano, a carbalkoxy or a carboxamido group, with the diazonium compound of an aromatic amine of the formula (7).

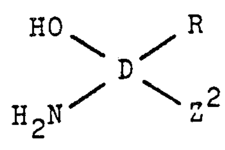

(7)

in which D, R and $Z^2$ have the abovementioned denotations, and with a copper-donating agent, the components being selected in such a way that $Z^1$ and $Z^2$ meet the abovementioned conditions.

26. Use of a compound of claim 1 or of a compound prepared in accordance with claim 25, of the formula (1) as dyes, preferably for dyeing or printing hydroxy- and/or carboxamido-containing materials, in particular fiber materials.

**Revendications**

1. Composé répondant à la formule générale (1) :

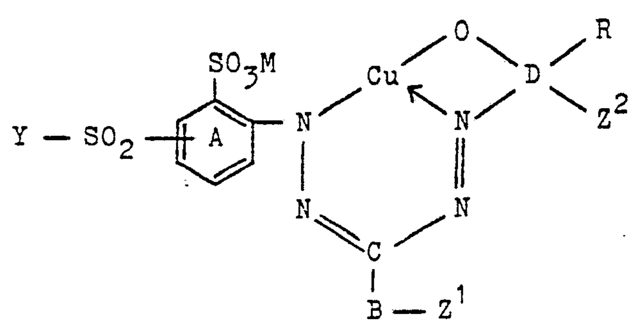

(1)

dans laquelle Y représente un radical vinyle ou un radical de formule (2) :

$$—CH_2—CH_2—E \qquad (2)$$

dans laquelle

E représente un substituant éliminable en milieu alcalin,

le noyau benzénique A peut porter des substituants supplémentaires,

le radical $Y—SO_2—$ se trouve, sur le noyau benzénique, en position méta par rapport au radical $—SO_3M$ représenté et en position para relativement à l'atome d'azote, ou en position para relativement au radical $—SO_3M$ et en position méta par rapport à l'atome d'azote,

M représente un atome d'hydrogène ou l'équivalent d'un métal,

B représente un radical phénylène ou un radical naphtylène, ces deux radicaux pouvant porter un ou deux substituants pris dans l'ensemble constitué par l'hydroxy, le nitro, les halogènes, les alkyles contenant de 1 à 5 atomes de carbone, les alcoxy en $C_1$-$C_4$, les alcoxycarbonyles dont la partie alkyle contient de 1 à 4 atomes de carbone, les radicaux $—SO_2—Y^1$ définis ci-dessous, les alkylsulfonyles en $C_1$-$C_4$, l'amino, les acylamino dont l'acyle dérive d'un acide carboxylique ou sulfonique aliphatique dont l'alkyle ou l'alcényle contient de 1 à 4 ou de 2 à 4 atomes de carbone ou dérive d'un acide benzoïque ou benzène-sulfonique, éventuellement porteur d'un sulfo, d'un carboxy, d'un chlore ou d'un méthyle, le sulfamoyle, les N-monoalkylamino en $C_1$-$C_4$ et les N,N-dialkylamino dont chacun des alkyles contiennent de 1 à 4 atomes de carbone, ou

B représente le radical d'un furanne, d'un thiophène, d'un pyrrole, d'un imidazole, d'un pyrazole, d'une pyridine, d'une pyrimidine, d'une quinoléine ou d'un benzimidazole, éventuellement porteur d'un alkyle en $C_1$-$C_4$, d'un alcoxy en $C_1$-$C_4$, d'un chlore, d'un benzyle, d'un phényléthyle et/ou d'un phényle, ou

B représente le radical bivalent d'un alcane en $C_1$-$C_8$ ou d'un alcène en $C_2$-$C_8$, ce radical d'alcane ou d'alcène pouvant en outre porter un radical phényle, lui-même pouvant porter des substituants pris dans l'ensemble constitué par le méthyle, l'éthyle, le méthoxy, l'éthoxy, le fluor, le chlore, le brome et le sulfamoyle, ou

l'ensemble $—B—Z^1$ représente un atome d'hydrogène,

D représente un cycle benzénique ou un cycle naphtalénique, cycles sur lesquels l'atome d'oxygène et l'atome d'azote sont en position ortho l'un par rapport à l'autre et qui peuvent porter un ou deux substituants, de préférence 1, pris dans l'ensemble constitué par les halogènes, le nitro, l'hydroxy, les alkyles en $C_1$-$C_5$, les alkylaminoalkyles dont les alkyles contiennent chacun de 1 à 5 atomes de carbone, les alcoxy en $C_1$-$C_4$, les alkylsulfonyles en $C_1$-$C_4$, le phénylsulfonyle, le sulfamoyle, les N-monoalkylsulfamoyles en $C_1$-$C_4$, les N,N-dialkylsulfamoyles dont chacun des alkyles contient de 1 à 4 atomes de carbone, les alcanoylamino en $C_2$-$C_5$, le benzoylamino, les N-monoalkylamino en $C_1$-$C_4$, les N,N-dialkylamino dont chacun des alkyles contient de 1 à 4 atomes de carbone, le phényle et les phényles porteurs d'un sulfo, d'un carboxy, d'un chlore, d'un méthyle et/ou d'un méthoxy,

R représente un atome d'hydrogène ou un radical répondant à la formule (2a) :

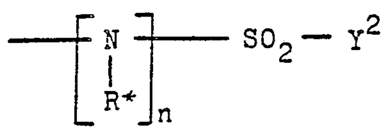

(2a)

qui est définie ci-dessous,

$Z^1$ représente un atome d'hydrogène ou un radical hydrosolubilisant qui est lié une fois ou deux fois à des atomes de carbone aliphatiques ou aromatiques de B,

$Z^2$ représente un atome d'hydrogène ou un radical hydrosolubilisant qui est lié une fois ou deux fois à des atomes de carbone aliphatiques de substituants de D ou à des atomes de carbone aromatiques de D,

R* représente un atome d'hydrogène ou un alkyle en $C_1$-$C_4$ qui peut porter un radical hydroxy, sulfato, sulfo ou carboxy.

n est un nombre égal à 0 ou à 1,

$Y^1$ représente un radical vinyle ou un radical de formule générale (2b) :

$$—CH_2—CH_2—E^1 \qquad (2b)$$

dans lequel

$E^1$ représente un radical hydroxy ou un substituant éliminable en milieu alcalin, et

$Y^2$ représente un radical vinyle ou un radical de formule générale (2c) :

$$—CH_2—CH_2—E^2 \qquad (2c)$$

dans lequel $E^2$ représente un radical hydroxy ou un substituant éliminable en milieu alcalin.

2. Composé selon la revendication 1 caractérisé en ce que le noyau benzénique A ne porte pas de substituants supplémentaires.

3. Composé selon la revendication 1 caractérisé en ce qu'un substituant supplémentaire, sur le noyau benzénique A, est un alkyle en $C_1$-$C_4$, un alcoxy en $C_1$-$C_4$, un halogène, un carboxy ou un sulfo.

4. Composé selon l'une quelconque des revendications 1 à 3, caractérisé en ce que B est un radical phénylène ou un radical naphtylène qui ne portent ni l'un ni l'autre de substituants supplémentaires.

5. Composé selon l'une quelconque des revendications 1 à 3, caractérisé en ce que B représente un radical naphtylène ou, mieux, un radical phénylène dont chacun est dépourvu de substituants

supplémentaires ou porte un ou deux substituants supplémentaires pris dans l'ensemble constitué par le chlore et les radicaux méthyle, méthoxy, éthoxy, nitro, hydroxy, méthylsulfonyle, éthylsulfonyle, hydroxy-2 éthylsulfonyle, sulfato-2 éthylsulfonyle, éthoxycarbonyle et méthoxycarbonyle.

6. Composé selon l'une quelconque des revendications 1 à 5, caractérisé en ce que D représente un noyau benzénique qui ne porte pas de substituants supplémentaires ou qui porte un ou deux substituants supplémentaires pris dans l'ensemble constitué par le chlore et les radicaux nitro, hydroxy, acétylamino, méthyle, méthylaminométhyle, méthoxy, méthylsulfonyle et éthylsulfonyle.

7. Composé selon l'une quelconque des revendications 1 à 6, caractérisé en ce que R représente un radical (2a) tel que défini à la revendication 1.

8. Composé selon l'une quelconque des revendications 1 à 7, caractérisé en ce que $Z^1$ est lié une ou deux fois à un ou à deux atomes de carbone aromatiques de B et représente un ou deux radicaux sulfo.

9. Composé selon l'une quelconque des revendications 1 à 7, caractérisé en ce que $Z^2$ est lié une fois ou deux fois à un ou à deux atomes de carbone aromatiques de D et représente un ou deux radicaux sulfo.

10. Composé selon l'une quelconque des revendications 1 à 9, caractérisé en ce que R représente un radical de formule (2a) et n est égal à 0.

11. Composé selon l'une quelconque des revendications 1, 2, 3, 6, 7 et 9, caractérisé en ce que B représente un radical phénylène qui ne porte pas de substituants supplémentaires ou qui porte un ou deux substituants supplémentaires pris dans l'ensemble constitué par le chlore et les radicaux méthyle, méthoxy, éthoxy, nitro, hydroxy, méthylsulfonyle, éthylsulfonyle, hydroxy-2 éthylsulfonyle, sulfato-2 éthylsulfonyle, éthoxycarbonyle et méthoxycarbonyle, et $Z^1$ représente un atome d'hydrogène, ou un ou deux radicaux sulfo, ou un radical sulfo et un radical carboxy.

12. Composé selon l'une quelconque des revendications 1, 2, 3, 4, 5, 6 et 8, caractérisé en ce que D représente un noyau benzénique qui porte un ou deux substituants supplémentaires pris dans l'ensemble constitué par le chlore et les radicaux nitro, hydroxy, acétylamino, méthyle, méthylaminométhyle, méthoxy, méthylsulfonyle et éthylsulfonyle, R représente un atome d'hydrogène, un radical hydroxy-2 éthylsulfonyle ou un radical sulfato-2 éthylsulfonyle, et $Z^2$ représente un atome d'hydrogène ou un ou deux radicaux sulfo.

13. Composé selon la revendication 1 qui répond à la formule générale (3) :

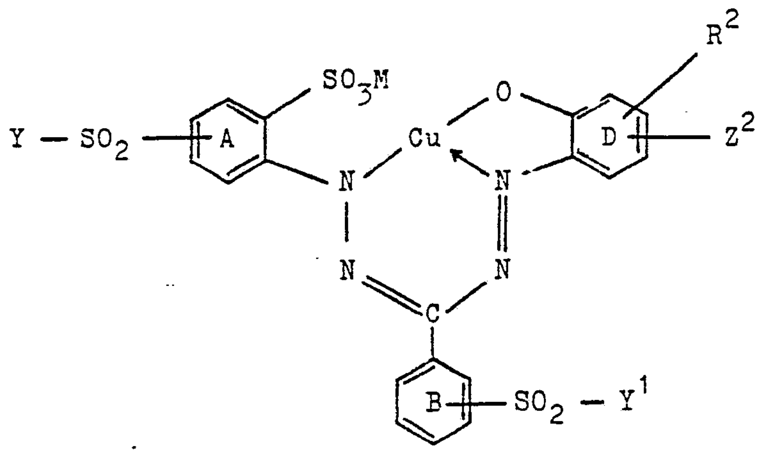

(3)

dans laquelle M, Y et $Y^1$ ont les significations données à la revendication 1, $R^2$ représente un radical $—SO_2—Y^2$ dans lequel $Y^2$ a la signification donnée à la revendication 1, ou représente un radical alkylsulfonyle en $C_1$-$C_4$, $Z^2$ représente un atome d'hydrogène ou un radical sulfo qui se trouve, sur le noyau benzénique D, en position ortho par rapport à l'atome d'oxygène, et les noyaux benzéniques A, B et D ne portent pas de substituants supplémentaires.

14. Composé selon la revendication 1 répondant à la formule générale (3) qui a été représentée à la revendication 13 et dans laquelle M, Y et $Y^1$ ont les significations données à la revendication I, $Z^2$ est en position para relativement au radical oxy et représente un radical sulfo, $R^2$ est en position méta par rapport à $Z^2$ et représente un atome d'hydrogène ou de chlore ou un radical acétylamino, méthyle, nitro ou sulfo, et les noyaux benzéniques A, B et D ne portent pas de substituants supplémentaires.

15. Composé selon l'une des revendications 13 et 14, caractérisé en ce que le radical $—SO_2—Y^1$ est en position para.

16. Composé selon la revendication 1 qui répond à la formule générale (4) :

(Siehe Formel Seite 50 f.)

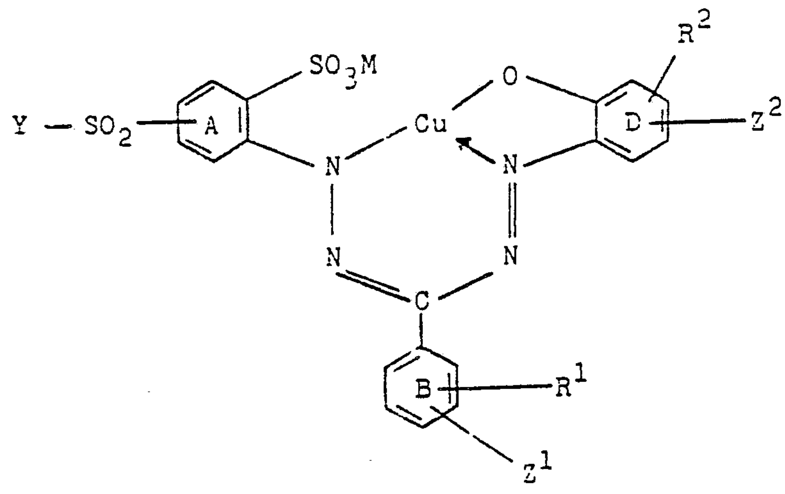

(4)

dans laquelle M et Y ont les significations données à la revendication 1, $R^1$ est lié à B par une position méta ou la position para relativement à l'atome de carbone de l'hétérocycle du complexe de Cu et représente un atome d'hydrogène, un radical méthyle, un radical méthoxy ou un atome de chlore, $Z^1$ est lié à B par une position méta ou la position para relativement à l'atome de carbone de l'hétérocycle du complexe de Cu et représente un atome d'hydrogène ou un radical sulfo, $R^2$ représente un atome d'hydrogène, et $Z^2$ est lié à D par la position para relativement à l'atome d'azote et représente un radical sulfo.

17. Composé selon la revendication 1 qui répond à la formule générale (4) représentée à la revendication 16, composé caractérisé en ce que M et Y ont les significations données à la revendication 1, $R^1$ et $Z^1$ ont les significations données à la revendication 16, $Z^2$ représente un radical sulfo lié à D par la position para relativement à l'atome d'oxygène, et $R^2$ représente un atome d'hydrogène ou représente, en position ortho sur D par rapport à l'atome d'oxygène, un atome de chlore ou un radical acétylamino, méthyle, nitro ou sulfo.

18. Composé selon la revendication 1 qui répond à la formule générale (4) représentée à la revendication 16, composé caractérisé en ce que M et Y ont les significations données à la revendication 1, $R^1$ et $Z^1$ ont les significations données à la revendication 16, $Z^2$ représente un radical sulfo qui se trouve en position ortho par rapport à l'atome d'oxygène sur D, et $R^2$ est en position méta par rapport à $Z^2$ et représente un radical alkylsulfonyle en $C_1$-$C_4$, un atome de chlore, un radical acétylamino ou un radical méthyle.

19. Composé selon la revendication 1 qui répond à la formule générale (5) :

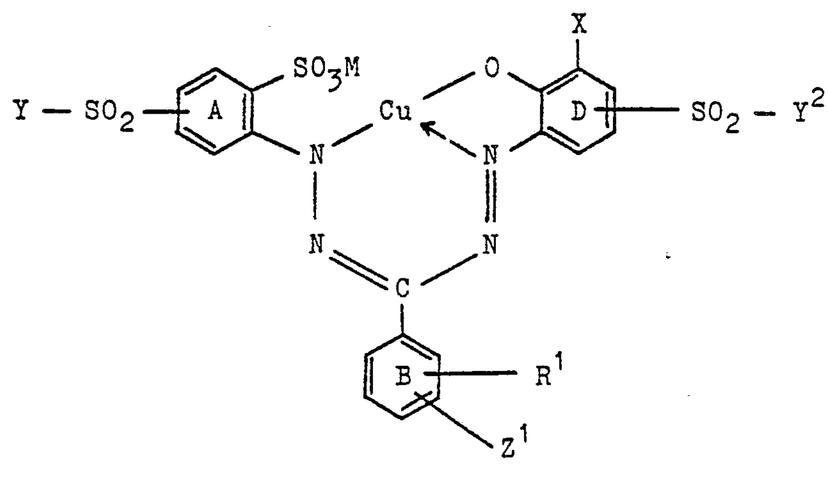

(5)

dans laquelle M, Y et $Y^2$ ont les significations données à la revendication 1, $R^1$ représente un atome d'hydrogène ou représente — et dans ce cas il se trouve, sur B, en l'une des positions méta et para relativement à l'atome de carbone de l'hétérocycle du complexe de Cu — un radical méthyle ou méthoxy ou un atome de chlore, $Z^1$ représente un atome d'hydrogène ou un radical sulfo qui se trouve, sur B, en l'une des positions méta et para relativement à l'atome de carbone de l'hétérocycle du complexe de Cu, et X représente soit un atome d'hydrogène, auquel cas le radical sulfato-2 éthylsulfonyle porté par D est en position ortho ou méta par rapport à X, soit un radical sulfo par rapport auquel le radical sulfato-2 éthylsulfonyle se trouve, sur D, en position méta.

20. Composé selon l'une quelconque des revendications 16, 17, 18 et 19, caractérisé en ce que $R^1$ ou

$Z^1$ se trouve, sur B, en position ortho relativement à l'atome de carbone de l'hétérocycle contenant Cu.

21. Composé selon l'une quelconque des revendications 1 à 20, caractérisé en ce que Y, $Y^1$ et $Y^2$ sont identiques les uns aux autres ou différents les uns des autres et représentent chacun un radical vinyle ou un radical éthyle qui porte, en position β, un atome de chlore ou de brome, un alcanoyloxy inférieur, un aroyloxy, un arylsulfonyloxy, un dialkylamino inférieur, un phosphato, un thiosulfato ou un sulfato, $Y^1$ et/ou $Y^2$ pouvant également représenter un radical hydroxy-2 éthyle.

22. Composé selon l'une quelconque des revendications 1 à 20, caractérisé en ce que Y représente un radical sulfato-2 éthyle, $Y^1$ un radical hydroxy-2 éthyle ou sulfato-2 éthyle et $Y^2$ un radical hydroxy-2 éthyle ou sulfato-2 éthyle, Y, $Y^1$ et $Y^2$ pouvant être identiques les uns aux autres ou différents les uns des autres.

23. Composé selon l'une quelconque des revendications 1 à 20, caractérisé en ce que le radical $-SO_2-Y$ se trouve, sur le noyau benzénique A, en position méta relativement à l'atome d'azote et, en même temps, en position para relativement au radical $-SO_3M$.

24. Composé selon l'une quelconque des revendications 1 à 23, caractérisé en ce que M représente un atome d'hydrogène ou un métal alcalin.

25. Procédé pour préparer les composés répondant à la formule générale 1 qui a été représentée et définie à la revendication 1, procédé caractérisé en ce qu'on fait réagir une hydrazone aromatique répondant à la formule générale (6) :

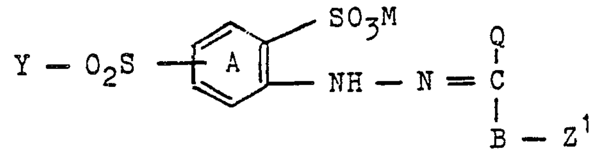

(6)

dans laquelle A, B, M, Y et $Z^1$ ont les significations précédemment données et Q représente un atome d'hydrogène ou un substituant remplaçable par copulation azoïque, par exemple un radical formyle, un radical carboxy ou un radical éventuellement modifié qui peut être saponifié en un radical carboxy, tel qu'un radical cyano, alcoxycarbonyle ou carbamoyle, avec le diazoïque d'une amine aromatique répondant à la formule générale (7) :

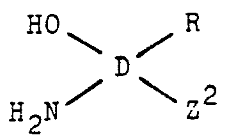

(7)

dans laquelle D, R et $Z^2$ ont les significations précédemment données, et avec un agent capable de céder du cuivre, les composantes étant choisies de telle façon que $Z^1$ et $Z^2$ remplissent les conditions énoncées plus haut.

26. Application d'un composé selon la revendication 1 ou d'un composé de formule générale (1) qui a été préparé selon la revendication 25, comme colorant, de préférence pour la teinture ou pour l'impression de matières contenant des radicaux hydroxy et/ou carbamoyles plus particulièrement de matières fibreuses de ce genre.